(19) Europäisches Patentamt
European Patent Office
Office européen des brevets

(11) EP 3 431 548 A1

(12) **EUROPEAN PATENT APPLICATION**
published in accordance with Art. 153(4) EPC

(43) Date of publication:
**23.01.2019 Bulletin 2019/04**

(21) Application number: **17766813.4**

(22) Date of filing: **16.03.2017**

(51) Int Cl.:
***C08L 67/02*** *(2006.01)*
***C08K 3/34*** *(2006.01)*
***C08K 7/00*** *(2006.01)*
***C08L 53/02*** *(2006.01)*
***F04D 29/02*** *(2006.01)*
***F04D 29/66*** *(2006.01)*

(86) International application number:
**PCT/JP2017/010773**

(87) International publication number:
**WO 2017/159818 (21.09.2017 Gazette 2017/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.03.2016 JP 2016054282**

(71) Applicant: **Kao Corporation**
**Chuo-ku**
**Tokyo 103-8210 (JP)**

(72) Inventor: **ODA, Yoshiro**
**Wakayama-shi**
**Wakayama 640-8580 (JP)**

(74) Representative: **Hoffmann Eitle**
**Patent- und Rechtsanwälte PartmbB**
**Arabellastraße 30**
**81925 München (DE)**

(54) **FAN**

(57) A fan containing a polyester resin composition containing a thermoplastic polyester resin (A) constituted of a dicarboxylic acid component and a diol component, including, for example, polybutylene terephthalate resin, polytrimethylene terephthalate resin, polyethylene terephthalate resin, and the like, one or more members selected from the group consisting of plasticizers and elastomers (B), and an inorganic filler (C). Since the fan of the present invention has a short vibration time even while having a high flexural modulus as a structural member, in the manufactured product equipment or apparatus or structured article that generates vibrations or noises, even when a fan is placed in the surroundings of the sources of vibrations or noises, the generated vibrations are damped and consequently excellent effects are exhibited that extraneous vibrations pertaining to properties of manufactured products or apparatus or unpleasant vibrations or vibrating sounds or noises are reduced.



Printed by Jouve, 75001 PARIS (FR)

**Description**

FIELD OF THE INVENTION

The present invention relates to a fan. More specifically, the present invention relates to a fan usable in audio equipment, electric appliances, transportation vehicles, construction buildings, industrial equipment, and the like.

BACKGROUND OF THE INVENTION

In the recent years, countermeasures for vibrations of various equipment have been required, and especially, the countermeasures are in demand in fields such as automobiles, household electric appliances, and precision instruments. In general, materials having high vibration-damping property include materials in which a metal plate and a vibration-absorbing material such as a rubber or asphalt are pasted together, or composite materials such as vibration-damping steel plates in which a vibration-absorbing material is sandwiched with metal plates. These vibration-damping materials retain the form of high-rigidity metal plate while absorbing vibrations with a vibration-absorbing material. In addition, vibration-damping materials include alloy materials in which kinetic energy is converted to thermal energy utilizing twinning or ferromagnetization to absorb vibrations even when only metals alone are used. However, there are some disadvantages that the composite materials have limitations in molding processability because different materials are pasted together, and that a manufactured product itself becomes heavy because a metal steel plate is used. In addition, the alloy materials are also heavy because of use of metals alone, and further have been insufficient in vibration-damping property.

In addition, a fan is a member usable as a structure member for various manufactured articles. Although conventionally used fan blades accomplish high strength and high elastic modulus durable for use, there are some serious problems in mainly keeping quietness. In the use of ventilation cooling fan of the recent years, the quietness has been even more demanding due to an increase in the amount of heat generation of the circuit accompanying high performance of the processing ability of the apparatus, and due to a high-speed rotation accompanying miniaturization. However, these materials themselves do not sufficiently have the functions of damping vibration noises generated by fan blades, so that it has been tried to reduce vibration noises of fans.

So far, an invention of a fan of which shape is changed to reduce vibration noises has been made (see, Patent Publication 1). In this invention, it has been difficult to realize a high ventilation efficiency while damping vibrations generated by a fan.

In addition, an invention of a phase control circuit in which a phase of a compressional wave generated by a fan is detected, and a signal canceling this phase that is separately produced is actively controlled has been reported (see, Patent Publication 2). In this method, since a phase controlling device other than a fan would be necessary, there still remain some disadvantages in the aspect of costs and the aspect that a power source for an active control circuit would be necessary.

For this reason, vibration-damping materials to be attached to a fan have been studied for controlling noises and vibrations of a fan. For example, a method of bonding a sheet having vibration-damping property on a surface of a fan has been disclosed (see, Patent Publications 3 and 4). However, there have been some disadvantages in stability upon use for a long period of time such that a vibration-damping sheet is removed from a fan by an impact during rotations of a fan. In addition, a method including applying a paint having a vibration-damping effect to a surface of a fan to form a vibration-damping film has been reported (see, Patent Publication 5). In this case, in order to realize a high vibration-damping effect, a paint having a vibration-damping effect must be applied thickly, but there are some disadvantages that the thicker the paint, the more easily the paint is removed from a surface of a fan.

On the other hand, as a means of reducing vibration noises by providing a vibration-damping property to the constituting material of the fan itself, Patent Publication 6 describes an invention of a quiet fan comprising a vibration-damping resin composition in which an active component for increasing a dipole moment is blended with a polyamide-based polymer alloy. In this case, since a fan is a mixture of a resin and a rubber, its flowability is high and elastic modulus is low. Conversely, when the elastic modulus is increased to an extent that is durable for use as fan blades, there are some defects that the vibration-damping performance is lowered. Even in the quiet fan described in Patent Publication 6, as a result of securing the elastic modulus needed as fan blades, the vibration-damping effects are not sufficient, and even in the most favorable results found in Examples, the reduction of noise level is as much as -0.9dB(A), which is found to have a vibration-damping effect of slightly less than 10% in terms of sound pressure.

Patent Publication 1: Japanese Patent Laid-Open No. Hei-9-184497
Patent Publication 2: Japanese Patent Laid-Open No. Hei-11-119781
Patent Publication 3: Japanese Patent Laid-Open No. Sho-63-236633
Patent Publication 4: Japanese Patent Laid-Open No. Sho-59-124843

Patent Publication 5: Japanese Patent Laid-Open No. Sho-56-159158
Patent Publication 6: Japanese Patent Laid-Open No. 2002-212417

## SUMMARY OF THE INVENTION

## PROBLEMS TO BE SOLVED BY THE INVENTION

The present invention relates to a fan that has excellent vibration-damping property even while having a high flexural modulus.

## MEANS TO SOLVE THE PROBLEMS

The present invention relates to the following [1] to [2]:

[1] A fan containing a polyester resin composition containing:

a thermoplastic polyester resin (A) constituted of a dicarboxylic acid component and a diol component,
one or more members selected from the group consisting of plasticizers and elastomers (B), and
an inorganic filler (C).

[2] A method for reducing vibration noise characterized by the use of a fan as defined in the above [1].

## EFFECTS OF THE INVENTION

Since the fan of the present invention has a short vibration time even while having a high flexural modulus as a structural member, in the manufactured product equipment, or apparatus or structured article that generates vibrations or noises, even when a fan is placed in the surroundings of the sources of vibrations or noises, the generated vibrations are damped and consequently excellent effects are exhibited that extraneous vibrations pertaining to properties of manufactured products or apparatus or unpleasant vibrations, or vibrating sounds or noises are reduced.
Also, vibrations that are generated upon applying vibrations to a fan itself are damped, and by those effects extraneous or unpleasant vibration sounds or noises upon rotating a fan can be reduced.
Furthermore, when a fan is rotated, rotation noises such as rotational vibration noises and interference noises in the frequency calculated from the number of rotations or the number of blades of a fan become larger. When this frequency overlaps with a resonance frequency of a molded article, vibration sounds and noises are considered to be even larger. However, the vibrations and noises can be reduced by using a fan of the present invention.

## BRIEF DESCRIPTION OF THE DRAWINGS

[FIG. 1] FIG. 1 is a view showing a jig used in the measurement of loss factor.
[FIG. 2] FIG. 2 is a view showing a jig used in the measurement of noises of a fan.
[FIG. 3] FIG. 3 is a graph showing the results of vibration tests and noise tests of a fan.
[FIG. 4] FIG. 4 is a graph showing the results of temperature dependency tests of loss factor for a resin composition constituting a fan.
[FIG. 5] FIG. 5 is a view showing a jig used in the measurement of noises of a fan.
[FIG. 6] FIG. 6 is a graph showing the relationships between frequency and noise of a fan.
[FIG. 7] FIG. 7 is a view showing a jig used in the measurement of noises of a fan.

## MODES FOR CARRYING OUT THE INVENTION

The fan of the present invention is constituted by a polyester resin composition containing
a thermoplastic polyester resin (A) constituted of a dicarboxylic acid component and a diol component,
one or more members selected from the group consisting of plasticizers and elastomers (B), and
an inorganic filler (C). The fan constituted by the above resin composition as used herein may also be described as the fan of the present invention.
Generally, when an inorganic filler is added to a resin, elastic modulus of an overall resin composition is improved, while a loss factor is lowered. The lowering of this loss factor is due to a decrease in the amount of energy

loss in a resin moiety because a proportion of a resin in the resin composition is reduced by addition of a filler. In view of the above, in the present invention, it has been found that a plasticizer and/or an elastomer is added to the system to give flexibility, so that energy loss is likely to take place, and that the lowering of loss factor can be suppressed while increasing the elastic modulus of the resin composition. Further, in the fan of the present invention, it is assumed that frictions are generated in the interfaces between a resin or a plasticizer and/or an elastomer and an inorganic filler to cause energy loss, so that the lowering of loss factor is even more suppressed.

The polyester resin composition constituting a fan of the present invention will be explained hereinbelow.

[Polyester Resin Composition]

[Thermoplastic Polyester Resin (A)]

The thermoplastic polyester resin (A) in the present invention is constituted of a dicarboxylic acid component and a diol component, and can be obtained by a combination of polycondensation of the dicarboxylic acid component and the diol component. Here, the dicarboxylic acid component as used herein embraces dicarboxylic acids and lower ester derivatives thereof, which are collectively referred to as a dicarboxylic acid component.

As the dicarboxylic acid component constituting the thermoplastic polyester resin (A), an aliphatic dicarboxylic acid, an alicyclic dicarboxylic acid, an aromatic dicarboxylic acid, or a dicarboxylic acid having a furan ring can be used. Specifically, the aliphatic dicarboxylic acid is preferably an aliphatic dicarboxylic acid having a total number of carbon atoms of from 2 to 26, which includes, for example, malonic acid, succinic acid, glutaric acid, adipic acid, suberic acid, sebacic acid, dodecanedioic acid, dimer acid, eicosanedionic acid, pimelic acid, azelaic acid, methylmalonic acid, and ethylmalonic acid. The alicyclic dicarboxylic acid is preferably an alicyclic dicarboxylic acid having a total number of carbon atoms of from 5 to 26, which includes, for example, adamantanedicarboxylic acid, norbornene dicarboxylic acid, cyclohexanedicarboxylic acid, and decalin dicarboxylic acid. The aromatic dicarboxylic acid is preferably an aromatic dicarboxylic acid having a total number of carbon atoms of from 8 to 26, which includes, for example, terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyldicarboxylic acid, 4,4'-diphenyl ether dicarboxylic acid, 5-sodium sulfoisophthalic acid, phenylindane dicarboxylic acid, anthrecene dicarboxylic acid, phenanthrene dicarboxylic acid, and 9,9'-bis(4-carboxyphenyl)fluorenic acid. The dicarboxylic acid having a furan ring is preferably a dicarboxylic acid having a furan ring having a total number of carbon atoms of from 6 to 26, which includes, for example, 2,5-furandicarboxylic acid. These dicarboxylic acids can be used alone or in a combination of two or more kinds. Among them, one or more members selected from the group consisting of succinic acid, glutaric acid, adipic acid, cyclohexanedicarboxylic acid, terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, and 2,5-furandicarboxylic acid are preferred, one or more members selected from the group consisting of succinic acid, cyclohexanedicarboxylic acid, terephthalic acid, isophthalic acid, 2,6-naphthalenedicarboxylic acid, and 2,5-furandicarboxylic acid are more preferred, and one or more members selected from the group consisting of terephthalic acid and 2,5-furandicarboxylic acid are even more preferred, from the viewpoint of improving Tg of the thermoplastic polyester resin (A) and improving rigidity.

As the diol component constituting the thermoplastic polyester resin (A), an aliphatic diol, an alicyclic diol, an aromatic diol, or a diol having a furan ring can be used. Specifically, the aliphatic diol is preferably an aliphatic diol and a polyalkylene glycol each having a total number of carbon atoms of from 2 to 26, which includes, for example, ethylene glycol, 1,2-propanediol, 1,3-propanediol, 1,4-butanediol, 1,2-butanediol, 1,3-butanediol, neopentyl glycol, 1,5-pentanediol, 1,6-hexanediol, diethylene glycol, triethylene glycol, polyethylene glycol, and polypropylene glycol. The alicyclic diol is preferably an alicyclic diol having a total number of carbon atoms of from 3 to 26, which includes, for example, cyclohexanedimethanol, hydrogenated bisphenol A, spiroglycol, and isosorbide. The aromatic diol is preferably an aromatic diol having a total number of carbon atoms of from 6 to 26, which includes, for example, bisphenol A, an alkylene oxide adduct of bisphenol A, 1,3-benzenedimethanol, 1,4-benzenedimethanol, 9,9'-bis(4-hydroxyphenyl)fluorene, and 2,2'bis(4'-β-hydroxyethoxyphenyl)propane. The diol having a furan ring is preferably a diol having a furan ring having a total number of carbon atoms of from 4 to 26, which includes, for example, 2,5-dihydroxyfuran. These diols can be used alone or in a combination of two or more kinds. Among them, one or more members selected from the group consisting of ethylene glycol, 1,3-propanediol, 1,4-butanediol, cyclohexanedimethanol, hydrogenated bisphenol A, isosorbide, bisphenol A, an alkylene oxide adduct of bisphenol A, 1,3-benzenedimethanol, 1,4-benzenedimethanol, and 2,5-dihydroxyfuran are preferred, and one or more members selected from the group consisting of ethylene glycol, 1,3-propanediol, 1,4-butanediol, cyclohexanedimethanol, hydrogenated bisphenol A, and 2,5-dihydroxyfuran, from the viewpoint of improving vibration-damping property.

In addition, as a combination of the dicarboxylic acid component and the diol component, it is preferable that either one of the dicarboxylic acid or the diol or both contain an aromatic ring, an alicyclic ring, or a furan ring, from the

viewpoint of improving Tg of the thermoplastic polyester resin (A) and improving rigidity. Specifically, in a case where the dicarboxylic acid component is one or more members selected from the group consisting of aromatic dicarboxylic acids, alicyclic dicarboxylic acids, and dicarboxylic acids having a furan ring, preferred are combinations thereof with one or more members selected from the group consisting of aliphatic diols, aromatic diols, alicyclic diols, and diols having a furan ring, and more preferred are combinations thereof with one or more members selected from the group consisting of aliphatic diols and aromatic diols. In a case where the dicarboxylic acid component is an aliphatic dicarboxylic acid, preferred are combinations thereof with one or more members selected from the group consisting of aromatic diols, alicyclic diols, and diols having a furan ring, and more preferred are combinations thereof with one or more aromatic diols.

The polycondensation of the above dicarboxylic acid component and the above diol component can be carried out in accordance with a known method without particular limitations.

The thermoplastic polyester resin (A) obtained has a glass transition temperature (Tg) of preferably 20°C or higher, more preferably 25°C or higher, even more preferably 30°C or higher, and still even more preferably 35°C or higher, from the viewpoint of giving rigidity capable of supporting its own shape and improving mold processability, and from the viewpoint of improving heat resistance. In addition, the thermoplastic polyester resin has a glass transition temperature of preferably 160°C or lower, more preferably 150°C or lower, even more preferably 140°C or lower, and still even more preferably 130°C or lower, from the viewpoint of improving vibration-damping property. In order to have a glass transition temperature adjusted to the above temperature, it is effective to control the backbone structure of the polyester resin. For example, when a thermoplastic polyester resin is prepared by using a rigid component such as an aromatic dicarboxylic acid component or an alicyclic diol component as a raw material, it is possible to increase a glass transition temperature. Here, the glass transition temperatures of the resins and the elastomers as used herein can be measured in accordance with a method described in Examples set forth below.

In addition, it is preferable that the thermoplastic polyester resin (A) in the present invention has crystallinity. Generally, since there are some differences in elastic moduli between the crystalline portions and the amorphous portions of the resin, a resin matrix comprising only an amorphous portion or a crystalline portion has smaller energy loss to vibration without causing large strains because of its homogeneous structure. On the other hand, in a resin matrix comprising a mixture of crystalline portions and amorphous portions, inhomogeneous continuous morphologies having different elastic moduli are formed, so that when vibration is applied, large strains are locally generated in the amorphous portions having lower elastic moduli, whereby consequently generating shearing frictions based on strains to improve energy loss. Accordingly, although the thermoplastic polyester resin generally contains larger proportions of amorphous portions, it is considered that the thermoplastic polyester resin is made crystalline in the present invention, so that it is possible to even more improve energy loss of the resin matrix. In addition, it is assumed that since the plasticizer and/or elastomer (B) is dispersed in the present invention, the amorphous portion is made flexible or given flexibility with the above component (B), so that the elastic modulus is even more lowered to increase the above effects; therefore, loss factor is even more increased, whereby a fan having more excellent vibration-damping property and vibration soundproof property can be obtained. The method for preparing a thermoplastic polyester resin having crystallinity includes a method of using a dicarboxylic acid component and a diol component with high purity, and a method of using a dicarboxylic acid component and diol component having a smaller side chain. Here, a resin having crystallinity as used herein refers to a resin in which exothermic peaks accompanying crystallization are observed when a resin is heated from 25°C to 300°C at a heating rate of 20°C/min, held in that state for 5 minutes, and thereafter cooled to 25°C or lower at a rate of -20°C/min, as prescribed in JIS K7122 (1999). More specifically, the resin refers to a resin having crystallization enthalpy $\Delta$Hmc obtained from areas of exothermic peaks of 1 J/g or more. As the thermoplastic polyester resin (A) constituting the present invention, it is preferable that a resin having a crystallization enthalpy $\Delta$Hmc of preferably 5 J/g or more, more preferably 10 J/g or more, even more preferably 15 J/g or more, and even more preferably 30 J/g or more is used.

Specific examples of the thermoplastic polyester resin (A) are preferably a polyethylene terephthalate constituted of terephthalic acid and ethylene glycol (PET resin, Tg: 70°C), a polytrimethylene terephthalate constituted of terephthalic acid and 1,3-propanediol (PTT resin, Tg: 50°C), a polybutylene terephthalate constituted of terephthalic acid and 1,4-butanediol (PBT resin, Tg: 50°C), 1,4-cyclohexanedimethylene terephthalate constituted of terephthalic acid and 1,4-cyclohexanedimethanol (PCT resin, Tg: 95°C), a polyethylene naphthalate constituted of 2,6-naphthalenedicarboxylic acid and ethylene glycol (PEN resin, Tg: 121°C), a polybutylene naphthalate constituted of 2,6-naphthalenedicarboxylic acid and 1,4-butanediol (PBN resin, Tg: 78°C), a polyethylene furanoate constituted of 2,5-furandicarboxylic acid and ethylene glycol (PEF resin, Tg: 87°C), and a polybutylene furanoate constituted of 2,5-furandicarboxylic acid and 1,4-butanediol (PBF resin, Tg: 35°C), and more preferably a polyethylene terephthalate constituted of terephthalic acid and ethylene glycol, a polytrimethylene terephthalate constituted of terephthalic acid and 1,3-propanediol, a polybutylene terephthalate constituted of terephthalic acid and 1,4-butanediol, a polyethylene naphthalate constituted of 2,6-naphthalenedicarboxylic acid and ethylene glycol, and a polyethylene furanoate constituted of 2,5-furandicarboxylic acid and ethylene glycol, from the viewpoint of rigidity, heat resistance, and vibration-damping property. These can be used alone or in a combination of two or more kinds.

The content of the thermoplastic polyester resin (A) in the polyester resin composition constituting the fan is

preferably 50% by mass or more, more preferably 55% by mass or more, and even more preferably 60% by mass or more, from the viewpoint of improving loss factor. In addition, the content is preferably 90% by mass or less, more preferably 80% by mass or less, even more preferably 75% by mass or less, and even more preferably 70% by mass or less, from the viewpoint of improving elastic modulus.

[Plasticizer and/or Elastomer (B)]

As the component (B) in the present invention, one or more members selected from the group consisting of plasticizers and elastomers are used. Here, one or more members selected from the group consisting of plasticizers and elastomers as used herein may be collectively referred to as the component (B).

(Plasticizer)

It is preferable that the plasticizer in the present invention contains one or more members selected from the group consisting of polyester-based plasticizers, polyhydric alcohol ester-based plasticizers, polycarboxylic acid ester-based plasticizers, and compounds represented by the following general formula (I):

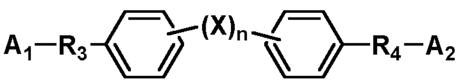

(I)

wherein each of $A_1$ and $A_2$ is independently an alkyl group having 4 or more carbon atoms and 18 or less carbon atoms, an aralkyl group having 7 or more carbon atoms and 18 or less carbon atoms, or a mono- or diether of a (poly)oxyalkylene adduct thereof; n is 0 or 1; X is any one of - $SO_2$-, -O-, -$CR_1R_2$-, and -S-, wherein each of $R_1$ and $R_2$ is independently H or an alkyl group having 4 or less carbon atoms, and wherein each of $R_3$ and $R_4$ is independently any one of -O-, -CO-, and -$CH_2$-.

Specific examples of the polyester-based plasticizers include polyesters obtained from a dicarboxylic acid having preferably from 2 to 12 carbon atoms, and more preferably from 2 to 6 carbon atoms, and a di-alcohol or a (poly)oxyalkylene adduct thereof having preferably from 2 to 12 carbon atoms, and more preferably from 2 to 6 carbon atoms, and the like. The dicarboxylic acid includes succinic acid, adipic acid, sebacic acid, phthalic acid, terephthalic acid, isophthalic acid, and the like, and the di-alcohol includes propylene glycol, 1,3-butanediol, 1,4-butanediol, 1,6-hexanediol, ethylene glycol, diethylene glycol, triethylene glycol, and the like. In addition, a hydroxyl group or a carboxy group at a polyester terminal may be esterified with a monocarboxylic acid or a mono-alcohol to cap.

Specific examples of the polyhydric alcohol ester-based plasticizer include mono-, di- or triesters of a polyhydric alcohol or a (poly)oxyalkylene adduct thereof, and a monocarboxylic acid having preferably from 1 to 12 carbon atoms, more preferably from 1 to 6 carbon atoms, and even more preferably from 1 to 4 carbon atoms, or the like. The polyhydric alcohol includes polyethylene glycols, polypropylene glycols, glycerol, the above di-alcohols, and the like. The monocarboxylic acid includes acetic acid, propionic acid, and the like.

The polycarboxylic acid ester-based plasticizer includes mono-, di- or triesters of a polycarboxylic acid, and a mono-alcohol or a (poly)oxyalkylene adduct thereof having preferably from 1 to 12 carbon atoms, more preferably from 1 to 6 carbon atoms, and even more preferably from 1 to 4 carbon atoms, or the like. The polycarboxylic acid includes trimellitic acid, the above dicarboxylic acids, and the like. The mono-alcohol includes methanol, ethanol, 1-propanol, 1-butanol, 2-ethylhexanol, and the like.

Each of $A_1$ and $A_2$ in the general formula (I) is independently an alkyl group having 4 or more carbon atoms and 18 or less carbon atoms, an aralkyl group having 7 or more carbon atoms and 18 or less carbon atoms, or a mono- or diether of a (poly)oxyalkylene oxide adduct thereof.

The alkyl group having 4 or more carbon atoms and 18 or less carbon atoms may be linear or branched. The number of carbon atoms of the alkyl group is 4 or more and 18 or less, and the number of carbon atoms is preferably 6 or more, from the viewpoint of improving crystallization velocity, and the number of carbon atoms is preferably 15 or less, more preferably 12 or less, and even more preferably 10 or less, from the viewpoint of bleeding resistance. Specific examples include a butyl group, a pentyl group, a hexyl group a heptyl group, an octyl group, a nonyl group, a decyl group, an undecyl group, a dodecyl group, a hexadecyl group, an octadecyl group, and the like.

The number of carbon atoms of the aralkyl group having 7 or more carbon atoms and 18 or less carbon atoms is preferably 8 or more, from the viewpoint of improving crystallization velocity, and the number of carbon atoms is preferably 15 or less, more preferably 12 or less, and even more preferably 10 or less, from the viewpoint of bleeding resistance. Specific examples include a benzyl group, a phenethyl group, a phenylpropyl group, a phenylpentyl group, a phenylhexyl group, a phenylheptyl group, a phenyloctyl group, and the like.

In addition, the mono- or diether of a (poly)oxyalkylene oxide adduct of the alkyl group or aralkyl group mentioned

above includes an ether with a (poly)oxyalkylene group having an alkylene group having preferably from 2 to 10 carbon atoms, more preferably from 2 to 6 carbon atoms, and even preferably from 2 to 4 carbon atoms. The (poly)oxyalkylene group means an oxyalkylene group or a polyoxyalkylene group.

n in the general formula (I) is 0 or 1.

X in the general formula (I) is any one of $-SO_2-$, -O-, $-CR_1R_2-$, and -S-, and preferably $-SO_2-$ and -O-, wherein each of $R_1$ and $R_2$ is independently H or an alkyl group having 4 or less carbon atoms. The alkyl group having 4 or less carbon atoms may be linear or branched, and includes, for example, a methyl group, an ethyl group, a propyl group, and a butyl group.

Each of $R_3$ and $R_4$ in the general formula (I) is independently any one of -O-, -CO-, and $-CH_2-$.

Specific examples of the compounds represented by the general formula (I) include, for example, the following compounds:

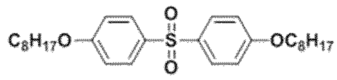

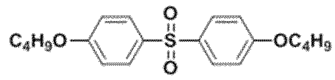

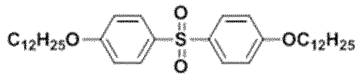

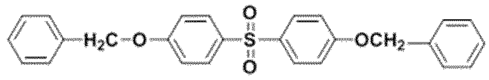

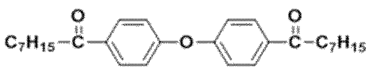

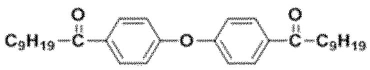

These polyester-based plasticizers, polyhydric alcohol ester-based plasticizers, polycarboxylic acid ester-based plasticizers, and compounds represented by the following general formula (I) can be prepared in accordance with a known method. Alternatively, a commercially available product may be used.

In addition, the plasticizer preferably contains one or more members selected from the group consisting of polyester-based plasticizers, polyhydric alcohol ester-based plasticizers, polycarboxylic acid ester-based plasticizers, and compounds represented by the general formula (I), each having a (poly)oxyalkylene group or an alkylene group having from 2 to 10 carbon atoms, and more preferably one or more members selected from the group consisting of polyester-based plasticizers, polyhydric alcohol ester-based plasticizers, polycarboxylic acid ester-based plasticizers, and compounds represented by the general formula (I), each having a (poly)oxyalkylene group, from the viewpoint of improving loss factor. Here, the oxyalkylene group has an alkylene group having preferably from 2 to 10 carbon atoms, more preferably from 2 to 6 carbon atoms, and even more preferably from 2 to 4 carbon atoms, and an oxyethylene group, an oxypropylene group or an oxybutylene group is even more preferred, and an oxyethylene group or an oxypropylene group is still even more preferred.

Furthermore, from the viewpoint of improving loss factor, the plasticizer preferably contains one or more members selected from the group consisting of the following Compound Groups (A) to (C), and more preferably one or more members selected from the group consisting of the following Compound Groups (A) and (B). When two or more members are used in combination, the compounds may belong to the same Compound Group, or different Compound Groups.
Compound Group (A): an ester compound having two or more ester groups in the molecule, wherein at least one kind of the alcohol component constituting the ester compound is an adduct of an alcohol reacted with an alkylene oxide having from 2 to 3 carbon atoms in an amount of from 0.5 to 5 mol on average, per one hydroxyl group; Compound Group (B): a compound represented by the formula (II):

$$R^5O\text{-}CO\text{-}R^6\text{-}CO\text{-}[(OR^7)_mO\text{-}CO\text{-}R^6\text{-}CO\text{-}]_nOR^5 \quad (II)$$

wherein $R^5$ is an alkyl group having from 1 to 4 carbon atoms; $R^6$ is an alkylene group having from 2 to 4 carbon atoms; $R^7$ is an alkylene group having from 2 to 6 carbon atoms, m is the number of from 1 to 6, and n is the number of from 1 to 12, with proviso that all of $R^6$'s may be identical or different, and that all of $R^7$'s may be identical or different; and Compound Group (C): an ester compound having two or more ester groups in the molecule, wherein the alcohol component constituting the ester compound is a mono-alcohol.

Compound Group (A)

It is preferable that the ester compound contained in Compound Group (A) is a polyhydric alcohol ester or a polycarboxylic acid ether ester having two or more ester groups in the molecule, wherein at least one kind of the alcohol component constituting the ester compound is preferably an ester compound which is an adduct of an alcohol reacted with an alkylene oxide having from 2 to 3 carbon atoms in an amount of from 0.5 to 5 mol on average, per one hydroxyl group.

Specific examples of the compound are preferably

esters obtained from acetic acid and an adduct of glycerol reacted with ethylene oxide in an amount of from 3 to 6 mol on average (reacted with ethylene oxide in an amount of from 1 to 2 mol per one hydroxyl group); esters obtained from acetic acid and a polyethylene glycol reacted with ethylene oxide in an amount of from 4 to 6 mol on average;
esters obtained from succinic acid and a polyethylene glycol monomethyl ether reacted with ethylene oxide in an amount of from 2 to 3 mol on average (reacted with ethylene oxide in an amount of from 2 to 3 mol per one hydroxyl group);
esters obtained from adipic acid and diethylene glycol monomethyl ether;
esters obtained from terephthalic acid and a polyethylene glycol monomethyl ether reacted with ethylene oxide in an amount of from 2 to 3 mol on average (reacted with ethylene oxide in an amount of from 2 to 3 mol per one hydroxyl group); and
esters obtained from 1,3,6-hexanetricarboxylic acid and diethylene glycol monomethyl ether.

Compound Group (B)

$R^5$ in the formula (II) is an alkyl group having from 1 to 4 carbon atoms, and two of them are present in one molecule, both at the terminals of the molecule. $R^5$ may be linear or branched, so long as the number of carbon atoms is from 1 to 4. The number of carbon atoms of the alkyl group is preferably from 1 to 4, and more preferably from 1 to 2, from the viewpoint of exhibiting coloration resistance and plasticizing effect. Specific examples include a methyl group, an ethyl group, a propyl group, an isopropyl group, a butyl group, a sec-butyl group, a tert-butyl group, and an iso-butyl group, among which a methyl group and an ethyl group are preferred, and a methyl group is more preferred, from the viewpoint of improving loss factor.

$R^6$ in the formula (II) is an alkylene group having from 2 to 4 carbon atoms, and preferred examples include linear alkylene groups. Specific examples include an ethylene group, a 1,3-propylene group, and a 1,4-butylene group. An ethylene group, a 1,3-propylene group, and a 1,4-butylene group are preferred, and an ethylene group is more preferred, from the viewpoint of improving loss factor. Here, all the $R^6$'s may be identical or different.

$R^7$ in the formula (II) is an alkylene group having from 2 to 6 carbon atoms, and $OR^7$ exists in the repeating unit as an oxyalkylene group. $R^7$ may be linear or branched so long as the alkylene group has from 2 to 6 carbon atoms. The number of carbon atoms of the alkylene group is preferably from 2 to 6, and more preferably from 2 to 3, from the viewpoint of improving loss factor. Specific examples include an ethylene group, a 1,2-propylene group, a 1,3-propylene group, a 1,2-butylene group, a 1,3-butylene group, a 1,4-butylene group, a 2-methyl-1,3-propylene group, a 1,2-pentylene group, a 1,4-pentylene group, a 1,5-pentylene group, a 2,2-dimethyl-1,3-propylene group, a 1,2-hexylene group, a 1,5-hexylene group, a 1,6-hexylene group, a 2,5-hexylene group, and a 3-methyl-1,5-pentylene group, among which an ethylene group, a 1,2-propylene group, and a 1,3-propylene group are preferred. Here, all the $R^7$'s may be identical or different.

m is an average number of repeats of an oxyalkylene group, and m is preferably the number of from 1 to 6, more preferably the number of from 1 to 4, and even more preferably the number of from 1 to 3, from the viewpoint of heat resistance.

n is an average number of repeats of repeating units, i.e. an average degree of polymerization, and n is the number of from 1 to 12. n is preferably the number of from 1 to 12, more preferably the number of from 1 to 6, and even more preferably the number of from 1 to 5, from the viewpoint of improving loss factor as a vibration-damping material. The average degree of polymerization may be obtained by an analysis such as NMR, but the average degree of polymerization can be calculated in accordance with the method described in Examples set forth below.

Specific examples of the compound represented by the formula (II) are preferably compounds in which all the $R^5$'s are methyl groups, $R^6$ is an ethylene group or a 1,4-butylene group, $R^7$ is an ethylene group or a 1,3-propylene group, m is the number of from 1 to 4, and n is the number of from 1 to 6, and more preferably compounds in which all the $R^5$'s are methyl groups, $R^6$ is an ethylene group or a 1,4-butylene group, $R^7$ is an ethylene group or a 1,3-propylene group, m is the number of from 1 to 3, and n is the number of from 1 to 5.

The compound represented by the formula (II) is not particularly limited so long as the compound has the structure mentioned above, and those obtained by reacting the following raw materials (1) to (3) are preferred. Here, (1) and (2), or (2) and (3) may form ester compounds. (2) may be an acid anhydride or an acid halide.

(1) Monohydric Alcohol Containing Alkyl Group Having from 1 to 4 Carbon Atoms
(2) Dicarboxylic Acid Containing Alkylene Group Having from 2 to 4 Carbon Atoms
(3) Dihydric Alcohol Containing Alkylene Group Having from 2 to 6 Carbon Atoms

(1) Monohydric Alcohol Containing Alkyl Group Having from 1 to 4 Carbon Atoms

The monohydric alcohol containing an alkyl group having from 1 to 4 carbon atoms is an alcohol including $R^5$ as defined above, and specific examples include methanol, ethanol, 1-propanol, 2-propanol, 1-butanol, 2-butanol, 2-methyl-1-propanol, and tert-butanol. Among them, methanol, ethanol, 1-propanol, and 1-butanol are preferred, methanol and ethanol are more preferred, and methanol is even more preferred, from the viewpoint of improving loss factor.

(2) Dicarboxylic Acid Containing Alkylene Group Having from 2 to 4 Carbon Atoms

The dicarboxylic acid containing an alkylene group having from 2 to 4 carbon atoms is a dicarboxylic acid including $R^6$ as defined above, and specific examples include succinic acid, glutaric acid, adipic acid, and derivatives thereof, e.g. succinic anhydride, glutaric anhydride, dimethyl succinate, dibutyl succinate, dimethyl glutarate, dimethyl adipate, and the like. Among them, succinic acid, adipic acid and derivatives thereof, e.g. succinic anhydride, dimethyl succinate, dibutyl succinate, and dimethyl adipate are preferred, and succinic acid and derivatives thereof, e.g. succinic anhydride, dimethyl succinate, and dibutyl succinate are more preferred, from the viewpoint of improving loss factor.

(3) Dihydric Alcohol Containing Alkylene Group Having from 2 to 6 Carbon Atoms

The dihydric alcohol containing an alkylene group having from 2 to 6 carbon atoms is a dihydric alcohol including $R^7$ as defined above, and specific examples include ethylene glycol, diethylene glycol, triethylene glycol, tetraethylene glycol, 1,2-propanediol, 1,3-propanediol, 2-methyl-1,3-propanediol, 2,2-dimethyl-1,3-propanediol, 1,2-butanediol, 1,3-butanediol, 1,4-butanediol, 1,2-pentanediol, 1,4-pentanediol, 1,5-pentanediol, 2,5-hexanediol, 1,6-hexanediol, and 3-methyl-1,5-pentanediol. Among them, diethylene glycol, triethylene glycol, 1,2-propanediol, 1,3-propanediol, tetraethylene glycol, and 1,4-butanediol are preferred, diethylene glycol, triethylene glycol, 1,2-propanediol, and 1,3-propanediol are more preferred, and diethylene glycol, triethylene glycol, and 1,3-propanediol are even more preferred, from the viewpoint of improving loss factor.

Accordingly, as the above (1) to (3),
it is preferable that (1) the monohydric alcohol is one or more members selected from the group consisting of methanol, ethanol, 1-propanol, and 1-butanol, that (2) the dicarboxylic acid is one or more members selected from the group consisting of succinic acid, adipic acid, glutaric acid, and derivatives thereof, and that (3) the dihydric alcohol is one or more members selected from the group consisting of diethylene glycol, triethylene glycol, 1,2-propanediol, 1,3-propanediol, tetraethylene glycol, and 1,4-butanediol;
it is more preferable that (1) the monohydric alcohol is one or more members selected from the group consisting of methanol and ethanol, that (2) the dicarboxylic acid is one or more members selected from the group consisting of succinic acid, adipic acid, and derivatives thereof, and that (3) the dihydric alcohol is one or more members selected from the group consisting of diethylene glycol, triethylene glycol, 1,2-propanediol, and 1,3-propanediol; and
it is even more preferable that (1) the monohydric alcohol is methanol, that (2) the dicarboxylic acid is one or more members selected from the group consisting of succinic acid and derivatives thereof, and that (3) the dihydric alcohol is one or more members selected from the group consisting of diethylene glycol, triethylene glycol, and 1,3-propanediol.

The method for obtaining an ester compound represented by the formula (II) by reacting the above (1) to (3) is not particularly limited, and the method includes, for example, the methods of the following Embodiment 1 and Embodiment 2:

Embodiment 1: a method including the steps of carrying out an esterification reaction between (2) the dicarboxylic

acid and (1) the monohydric alcohol to synthesize a dicarboxylic acid ester; and carrying out an esterification reaction between the dicarboxylic acid ester obtained and (3) the dihydric alcohol; and
Embodiment 2: a method including the step of allowing to react (1) the monohydric alcohol, (2) the dicarboxylic acid, and (3) the dihydric alcohol at one time.

Among these methods, the method of Embodiment 1 is preferred, from the viewpoint of adjusting an average degree of polymerization. Here, the reactions of each of the steps mentioned above can be carried out in accordance with a known method.
The compound represented by the formula (II) has an acid value of preferably 1.50 mgKOH/g or less, and more preferably 1.00 mgKOH/g or less, from the viewpoint of improving loss factor, and has a hydroxyl value of preferably 10.0 mgKOH/g or less, more preferably 5.0 mgKOH/g or less, and even more preferably 3.0 mgKOH/g or less, from the viewpoint of improving loss factor. The acid value and the hydroxyl value of the plasticizer as used herein can be measured in accordance with the methods described in Examples set forth below.
In addition, the number-average molecular weight of the compound represented by the formula (II) is preferably from 300 to 1,500, and more preferably from 300 to 1,000, from the viewpoint of improving loss factor, and from the viewpoint of coloration resistance. The number-average molecular weight of the plasticizer as used herein can be calculated in accordance with the method described in Examples set forth below.
The saponification value of the compound represented by the formula (II) is preferably from 500 to 800 mgKOH/g, and more preferably from 550 to 750 mgKOH/g, from the viewpoint of improving loss factor. The saponification value of the plasticizer as used herein can be measured in accordance with the method described in Examples set forth below.
The alkyl esterification percentage based on the two molecular terminals (terminal alkyl esterification percentage) of the compound represented by the formula (II) is preferably 95% or more, and more preferably 98% or more, from the viewpoint of improving loss factor. The terminal alkyl esterification percentage of the plasticizer as used herein can be calculated in accordance with the method described in Examples set forth below.
The ether group value of the compound represented by the formula (II) is preferably from 0 to 8 mmol/g, and more preferably from 0 to 6 mmol/g, from the viewpoint of shortening the vibration time. The ether group value of the plasticizer as used herein can be calculated in accordance with the method described in Examples set forth below.

Compound Group (C)

Specific examples of the ester compounds included in Compound Group (C) are preferably an ester obtained from adipic acid and 2-ethylhexanol (Example: DOA), and an ester obtained from phthalic acid and 2-ethylhexanol (Example: DOP).
The content of one or more members selected from the group consisting of polyester-based plasticizers, polyhydric alcohol ester-based plasticizers, polycarboxylic acid ester-based plasticizers, and compounds represented by the general formula (I), preferably the content of one or more members selected from the group consisting of polyester-based plasticizers, polyhydric alcohol ester-based plasticizers, polycarboxylic acid ester-based plasticizers, and compounds represented by the general formula (I), each having a (poly)oxyalkylene group or an alkylene group having from 2 to 10 carbon atoms, and more preferably the content of one or more members selected from the group consisting of polyester-based plasticizers, polyhydric alcohol ester-based plasticizers, polycarboxylic acid ester-based plasticizers, and compounds represented by the general formula (I), each having a (poly)oxyalkylene group, and the content of one or more compounds selected from the group consisting of Compound Groups (A) to (C) mentioned above, is preferably 50% by mass or more, more preferably 80% by mass or more, even more preferably 90% by mass or more, even more preferably 95% by mass or more, even more preferably substantially 100% by mass, and even more preferably 100% by mass, of the plasticizer, from the viewpoint of improving loss factor. The phrase substantially 100% by mass as used herein refers to a state in which impurities and the like are inevitably contained in a trace amount. The above-mentioned content of the plasticizer as used herein means a total content when plural compounds are contained.
By adding a plasticizer, not only loss factor in a room temperature region is improved but at the same time loss factor can be improved in a wide temperature region such as a low-temperature region or a high-temperature region. The content of the plasticizer, based on 100 parts by mass of the thermoplastic polyester resin (A), is preferably 1 part by mass or more, more preferably 3 parts by mass or more, even more preferably 5 parts by mass or more, even more preferably 10 parts by mass or more, even more preferably 15 parts by mass or more, and even more preferably 18 parts by mass or more, from the viewpoint of improving loss factor over a wide temperature region, and the content is preferably 50 parts by mass or less, more preferably 40 parts by mass or less, even more preferably 30 parts by mass or less, and even more preferably 25 parts by mass or less, from the viewpoint of suppressing the lowering of flexural modulus.
In addition, since it is said from the conversion of temperature-frequency of the polymer that exhibiting high loss factor in a wide temperature region can be similarly said as exhibiting high loss factor in a wide frequency region,

it is preferable that a plasticizer is added within the range as defined above, also from the viewpoint of realizing high loss factor over a wide frequency region. Furthermore, flexibility of the resin is improved and impact strength is improved by adding a plasticizer, so that the addition of the plasticizer is preferred also from the viewpoint of keeping high impact strength in addition to high loss factor and high elastic modulus. Moreover, some effects are exhibited that flowability is improved and moldability during injection molding is improved by adding a plasticizer.

In addition, the content of the plasticizer in the polyester resin composition constituting the fan is preferably 1% by mass or more, more preferably 3% by mass or more, even more preferably 5% by mass or more, even more preferably 8% by mass or more, and still even more preferably 10% by mass or more, from the viewpoint of improving loss factor, and the content is preferably 25% by mass or less, more preferably 20% by mass or less, and even more preferably 15% by mass or less, from the viewpoint of suppressing the lowering of flexural modulus.

It is preferable that the elastomer in the present invention is a thermoplastic elastomer.

(Thermoplastic Elastomer)

The thermoplastic elastomer in the present invention is preferably at least one member selected from styrenic thermoplastic elastomers, olefinic thermoplastic elastomers, polyester-based thermoplastic elastomers, polyamide-based thermoplastic elastomers, urethane-based thermoplastic elastomers, nitrile-based thermoplastic elastomers, fluorine-based thermoplastic elastomers, polybutadiene-based thermoplastic elastomers, and silicone-based thermoplastic elastomers. The styrenic thermoplastic elastomers include polystyrene-vinyl-polyisoprene-polystyrene block copolymers, copolymers of styrene and butadiene and hydrogenated product thereof, and examples are "HYBRAR" manufactured by KURARAY PLASTICS CO., Ltd., "Tuftec" and "S.O.E"(registered trademarks) manufactured by Asahi Kasei Corporation, "SEPTON"(registered trademark) manufactured by Kuraray Co., Ltd., "RABALON"(registered trademark) manufactured by Mitsubishi Chemical Corporation, and the like. The olefinic thermoplastic elastomers include those in which an olefinic rubber (EPR, EPDM) is finely dispersed in a matrix made of an olefin-based resin (polyethylene, polypropylene, and the like), and examples are "THERMORAN" (registered trademark) manufactured by Mitsubishi Chemical Corporation, "ESPOLEX" (registered trademark) manufactured by Sumitomo Chemicals, Co., Ltd., and the like. The polyester-based thermoplastic elastomers include copolymers of polybutylene terephthalate and polyether, and the like, and examples are "Hytrel"(registered trademark) manufactured by DUPONT-TORAY CO., LTD., and the like. The polyamide-based thermoplastic elastomers include block copolymers of nylon with polyester or polyol or those in which a lactam or a polyether diol of a dicarboxylic acid as a raw material is subjected to transesterification and polycondensation reaction. The urethane-based thermoplastic elastomers are, for example, "TPU" manufactured by Nippon Polyurethane, Co., Ltd. The nitrile-based thermoplastic elastomers include those in which acrylonitrile and butadiene are subjected to emulsion polymerization, and the like. The fluorine-based thermoplastic elastomers include copolymers of vinylidene fluoride and hexafluoropropylene, copolymers of vinylidene fluoride, hexafluoropropylene, and tetrafluoroethylene, and the like, and examples are "FTOR" (registered trademark) manufactured by Showa Kobunshi Kabushiki Kaisha, "Viton" (registered trademark) Series manufactured by Dupont, and the like. The polybutadiene-based and the silicone-based thermoplastic elastomers include an organosilicon polymer binding product having a siloxane bond as a backbone in which an organic group or the like is directly bonded to the silicon atom and the like, and examples include KBM Series manufactured by Shin-Etsu Silicone, and the like.

(Styrenic Elastomer)

The styrenic thermoplastic elastomer in the present invention (hereinafter styrenic elastomer) is composed of a block A in which a styrenic compound constituting a hard segment is polymerized and a block B in which a conjugated diene constituting a soft segment is polymerized. The styrenic compound used in the polymer block A includes, for example, styrenic compounds such as styrene, $\alpha$-methylstyrene, o-methylstyrene, m-methylstyrene, p-methylstyrene, and 1,3-dimethylstyrene; polycyclic aromatic compounds having a vinyl group such as vinylnaphthalene and vinylanthracene, and the like. Among them, the polymer of the styrenic compound is preferred, and the polymer of styrene is more preferred. The conjugated diene used in the polymer block B includes, for example, butadiene, isoprene, butylene, ethylene, 1,3-pentadiene, 2,3-dimethyl-1,3-butadiene, and the like, and preferably includes polyisoprene, polybutadiene, and copolymers of isoprene and butadiene, which is a block copolymer of one or more members selected from these conjugated diene monomers. In addition, in the block B, the styrenic compound used in the above polymer block A may be copolymerized. In the case of each of the copolymers, as the forms thereof, any of the forms of random copolymers, block copolymers, and tapered copolymers can be selected. In addition, the styrenic compound may have a hydrogenated structure.

Specific examples of the styrenic elastomer described above include polystyrene-isoprene block copolymers (SIS), polystyrene-polybutadiene copolymers (SEBS), polystyrene-hydrogenated polybutadiene copolymers (SEBS), polystyrene-hydrogenated polyisoprene-polystyrene block copolymers (SEPS), polystyrene-vinyl-polyisoprene-polystyrene block copolymers (SHIVS), polystyrene-hydrogenated polybutadiene-hydrogenated polyisoprene-polystyrene block copolymers, polystyrene-hydrogenated polybutadiene-polyisoprene-polystyrene block copolymers, and the like. These styrenic elastomers can be used alone in a single kind or in combination of two or more kinds. In the present invention, in particular, it is preferable to use a polystyrene-vinyl-polyisoprene-polystyrene block copolymer, and a commercially available product of the block copolymer as described above include "HYBRAR" Series manufactured by KURARAY PLASTICS CO., Ltd.

The styrene content in the styrenic elastomer is preferably 10% by mass or more, and more preferably 15% by mass or more, and preferably 30% by mass or less, and more preferably 25% by mass or less, from the viewpoint of improving vibration-damping property in the high-temperature region and the low-temperature region. Here, the high-temperature region as used herein means a temperature of from 35° to 80°C, and the low-temperature region as used herein means a temperature of from -20° to 10°C, and the styrene content of the copolymer can be measured in accordance with the method described in Examples set forth below.

[Styrene-Butadiene Block Copolymer]

Further, the polyester resin composition constituting a fan of the present invention may contain a styrene-butadiene block copolymer as an elastomer. By including the above component, a high vibration-damping effect at low temperatures can be expected. The styrene-butadiene block copolymer may have a hydrogenated structure. The styrene-butadiene block copolymer may be used together with a styrene-isoprene block copolymer, or may be used in place of the styrene-isoprene block copolymer. The content of the styrene-butadiene block copolymer, based on 100 parts by mass of the thermoplastic polyester resin (A), is preferably 3 parts by mass or more, more preferably 5 parts by mass or more, and even more preferably 8 parts by mass or more, even more preferably 10 parts by mass or more, and even more preferably 15 parts by mass or more, from the viewpoint of improving loss factor in the low-temperature region. In addition, the content is preferably 50 parts by mass or less, more preferably 40 parts by mass or less, and even more preferably 30 parts by mass or less, from the viewpoint of suppressing the lowering of the flexural modulus. The content of the styrene-butadiene block copolymer in the polyester resin composition constituting the fan is preferably 3% by mass or more, more preferably 5% by mass or more, and even more preferably 8% by mass or more, from the viewpoint of improving loss factor in the low-temperature region. In addition, the content is preferably 30% by mass or less, more preferably 25% by mass or less, and even more preferably 20% by mass or less, from the viewpoint of suppressing the lowering of the flexural modulus.

In addition, the elastomer has a glass transition temperature Tg of preferably -40°C or higher and preferably 20°C or lower, from the viewpoint of improving vibration-damping property in the high-temperature region and the low-temperature region.

The content of the elastomer, based on 100 parts by mass of the thermoplastic polyester resin (A), is preferably 10 parts by mass or more, more preferably 15 parts by mass or more, even more preferably 18 parts by mass or more, even more preferably 20 parts by mass or more, and even more preferably 25 parts by mass or more, from the viewpoint of improving loss factor in the low temperature region. In addition, the content is preferably 50 parts by mass or less, more preferably 40 parts by mass or less, and even more preferably 35 parts by mass or less, from the viewpoint of suppressing the lowering of the flexural modulus.

In addition, the content of the elastomer in the polyester resin composition constituting the fan is preferably 5% by mass or more, more preferably 10% by mass or more, and even more preferably 15% by mass or more, from the viewpoint of improving loss factor. In addition, the content is preferably 30% by mass or less, more preferably 25% by mass or less, and even more preferably 20% by mass or less, from the viewpoint of suppressing the lowering of the flexural modulus.

In the present invention, as the component (B), the plasticizer and the elastomer may be used together, or the plasticizer which may be used alone or in two or more kinds, can be used in a combination with an elastomer which may be used alone or in two or more kinds. A plasticizer alone, and combinations of
two or more kinds of plasticizers,
a plasticizer and a styrene-isoprene block copolymer,
a plasticizer and a styrene-butadiene block copolymer,
a plasticizer, a styrene-isoprene block copolymer, and a styrene-butadiene block copolymer
are preferred. By combining the plasticizer and the styrenic elastomer, it is preferred because loss factor in a room temperature region is further improved, and loss factor is improved in wide temperature regions such as a low-temperature region and a high-temperature region.

A total content of the plasticizer and the elastomer when used together, based on 100 parts by mass of the thermoplastic polyester resin (A), is preferably 15 parts by mass or more, more preferably 20 parts by mass or more, and even more preferably 25 parts by mass or more, from the viewpoint of improving loss factor. Also, the total content is preferably 60 parts by mass or less, more preferably 50 parts by mass or less, and even more preferably 40 parts by

mass or less, from the viewpoint of suppressing the lowering of elastic modulus.

The mass ratio of the plasticizer to the elastomer when used together, i.e. plasticizer/elastomer, is preferably from 30/70 to 70/30, and more preferably from 40/60 to 60/40, from the viewpoint of suppressing the lowering of elastic modulus.

[Inorganic Filler (C)]

The polyester resin composition constituting a fan of the present invention contains an inorganic filler (C), from the viewpoint of improving flexural modulus. The inorganic filler (C) in the present invention is not particularly limited, so long as it is a known inorganic filler, and specifically, one or more members selected from the group consisting of plate-like fillers, granular fillers, acicular fillers, and fibrous fillers, that are ordinarily usable in the reinforcement of thermoplastic resins can be used.

The plate-like filler refers to those having an aspect ratio (length of the longest side of the largest surface of the plate-like filler/thickness of the surface) of 20 or more and 150 or less. The length of the plate-like filler (length of the longest side in the largest surface) is preferably 1.0 μm or more, more preferably 5 μm or more, even more preferably 10 μm or more, and even more preferably 20 μm or more, and preferably 150 μm or less, more preferably 100 μm or less, even more preferably 50 μm or less, even more preferably 40 μm or less, and even more preferably 30 μm or less, from the viewpoint of obtaining excellent dispersibility in the polyester resin composition constituting the fan, improving flexural modulus, and/or improving loss factor. The thickness is, but not particularly limited to, preferably 0.01 μm or more, more preferably 0.05 μm or more, even more preferably 0.1 μm or more, and even more preferably 0.2 μm or more, and preferably 5 μm or less, more preferably 3 μm or less, even more preferably 2 μm or less, even more preferably 1 μm or less, and even more preferably 0.5 μm or less, from the same viewpoint. In addition, the aspect ratio of the plate-like filler is preferably 30 or more, more preferably 40 or more, and even more preferably 50 or more, and preferably 120 or less, more preferably 100 or less, even more preferably 90 or less, and even more preferably 80 or less, from the same viewpoint. Specific examples of the plate-like filler include, for example, glass flake, non-swellable mica, swellable mica, graphite, metal foil, talc, clay, mica, sericite, zeolite, bentonite, organic modified bentonite, montmorillonite, organic modified montmorillonite, dolomite, smectite, hydrotalcite, plate-like iron oxide, plate-like calcium carbonate, plate-like magnesium hydroxide, plate-like barium sulfate, and the like. Among them, talc, mica, and plate-like barium sulfate are preferred, and talc and mica are more preferred, from the viewpoint of improving flexural modulus and suppressing the lowering of loss factor. The length and thickness of the plate-like filler can be obtained by observing randomly chosen 100 fillers with an optical microscope, and calculating an arithmetic mean thereof.

The granular fillers include not only those showing the true spherical form but also those that are cross-sectionally elliptic or substantially elliptic, and have an aspect ratio (longest diameter of the granular filler/shortest diameter of the granular filler) of 1 or more and less than 2, and one having an aspect ratio of nearly 1 is preferred. The average particle size of the granular filler is preferably 1.0 μm or more, more preferably 5 μm or more, even more preferably 10 μm or more, and even more preferably 20 μm or more, and preferably 50 μm or less, more preferably 40 μm or less, and even more preferably 30 μm or less, from the viewpoint of obtaining excellent dispersibility in the polyester resin composition constituting the fan, improving flexural modulus, and/or improving loss factor. Specific examples include kaolin, fine silicic acid powder, feldspar powder, granular calcium carbonate, granular magnesium hydroxide, granular barium sulfate, aluminum hydroxide, magnesium carbonate, calcium oxide, aluminum oxide, magnesium oxide, titanium oxide, aluminum silicate, various balloons, various beads, silicon oxide, gypsum, novaculite, dawsonite, white clay, and the like. Among them, granular barium sulfate, aluminum hydroxide, and granular calcium carbonate are preferred, and granular calcium carbonate and granular barium sulfate are more preferred, from the viewpoint of improving flexural modulus and improving loss factor. Here, the diameter of the granular filler can be obtained by cutting 100 randomly chosen fillers, observing the cross sections with an optical microscope, and calculating an arithmetic mean thereof.

The acicular filler refers to those having an aspect ratio (particle length/particle size) within the range of 2 or more and less than 20. The length of the acicular filler (particle length) is preferably 1.0 μm or more, more preferably 5 μm or more, even more preferably 10 μm or more, even more preferably 20 μm or more, and even more preferably 30 μm or more, and preferably 150 μm or less, more preferably 100 μm or less, even more preferably 80 μm or less, and even more preferably 60 μm or less, from the viewpoint of obtaining excellent dispersibility in the polyester resin composition constituting the fan, improving flexural modulus, and/or improving loss factor. The particle size is, but not particularly limited to, preferably 0.01 μm or more, more preferably 0.1 μm or more, and even more preferably 0.5 μm or more, and preferably 20 μm or less, more preferably 15 μm or less, and even more preferably 10 μm or less, from the same viewpoint. In addition, the aspect ratio of the acicular filler is preferably 5 or more, and preferably 10 or less, from the same viewpoint. Specific examples of the acicular filler include, for example, potassium titanate whiskers, aluminum borate whiskers, magnesium-based whiskers, silicon-based whiskers, wollastonite, sepiolite, asbestos, zonolite, phosphate fibers, ellestadite, slag fibers, gypsum fibers, silica fibers, silica alumina fibers, zirconia fibers, boron nitride fibers, silicon nitride fibers, and boron fibers, and the like. Among them, potassium titanate whiskers and wollastonite are preferred. Here, the particle length and particle size of the acicular filler can be obtained by observing 100 randomly chosen fillers with an optical microscope, and calculating an arithmetic mean thereof. In a case where the particle size has a length and a breadth, the average particle size is calculated using the length.

The fibrous filler refers to those having an aspect ratio (average fiber length/average fiber diameter) of exceeding 150. The length of the fibrous filler (average fiber length) is preferably 0.15 mm or more, more preferably 0.2 mm or more, even more preferably 0.5 mm or more, and even more preferably 1 mm or more, and preferably 30 mm or less, more preferably 10 mm or less, and even more preferably 5 mm or less, from the viewpoint of improving flexural modulus and improving loss factor. The average fiber diameter is, but not particularly limited to, preferably 1 μm or more, and more preferably 3 μm or more, and preferably 30 μm or less, more preferably 20 μm or less, and even more preferably 10 μm or less, from the same viewpoint. In addition, the aspect ratio is preferably 200 or more, more preferably 250 or more, and even more preferably 500 or more, and preferably 10,000 or less, more preferably 5,000 or less, even more preferably 1,000 or less, and even more preferably 800 or less, from the same viewpoint. Specific examples of the fibrous filler include, for example, glass fibers, carbon fibers, graphite fibers, metal fibers, cellulose fibers, and the like. Among them, carbon fibers and glass fibers are preferred, and glass fibers are more preferred, from the same viewpoint. Here, the particle length and particle size of the fibrous filler can be obtained by observing 100 randomly chosen fillers with an optical microscope, and calculating an arithmetic mean thereof. In a case where the particle size has a length and a breadth, the average particle size is calculated using the length. In addition, as the fiber diameter not only those that are in a circular form where a length and a breadth are the same, but also those having different length and breadth such as an elliptic form (for example, length/breadth =4) or an eyebrow form (for example, length/breadth =2) may be used. On the other hand, when a resin and a fibrous filler are melt-kneaded in order to prepare a resin composition using a kneader such as a twin-screw extruder, although the fibrous filler is cut with a shearing force in the kneading portion to shorten the average fiber length, the average fiber length of the fibrous filler in the resin is preferably from 100 to 800 μm, more preferably from 200 to 700 μm, and even more preferably from 300 to 600 μm, from the viewpoint of flexural modulus.

The above granular, plate-like, or acicular filler may be subjected to a coating or binding treatment with a thermoplastic resin such as an ethylene/vinyl acetate copolymer, or with a thermosetting resin such as an epoxy resin, or the filler may be treated with a coupling agent such as amino silane or epoxy silane.

These fillers can be used alone or in a combination of two or more kinds, and fillers having different shapes can be combined. Among them, from the viewpoint of improving flexural modulus and suppressing the lowering of loss factor, the filler is preferably one or more members selected from the group consisting of plate-like fillers, acicular fillers, and fibrous fillers, more preferably one or more members selected from the group consisting of plate-like fillers and acicular fillers, and even more preferably one or more members of plate-like fillers. Specifically, mica, talc, and glass fibers are preferably used, mica and talc are more preferably used, and mica is even more preferably used. The plate-like filler is oriented in the direction of flow in an injection molded article and the like, so that the tensile modulus in the oriented direction and the flexural modulus in a perpendicular direction to the oriented direction are remarkably improved, as compared to other fillers. Also, since there are many interfaces that influence frictions generated upon the vibration of the molded article, it is assumed that the lowering of loss factor is further suppressed. The content of the plate-like filler is preferably 60% by mass or more, more preferably 80% by mass or more, and even more preferably 90% by mass or more, of the inorganic filler, from the viewpoint of suppressing the lowering of loss factor.

The content of the inorganic filler (C), based on 100 parts by mass of the thermoplastic polyester resin (A), is preferably 10 parts by mass or more, more preferably 15 parts by mass or more, even more preferably 20 parts by mass or more, even more preferably 30 parts by mass or more, and even more preferably 35 parts by mass or more, from the viewpoint of improving flexural modulus. In addition, the content is preferably 80 parts by mass or less, more preferably 70 parts by mass or less, even more preferably 60 parts by mass or less, even more preferably 50 parts by mass or less, and even more preferably 45 parts by mass or less, from the viewpoint of suppressing the lowering of loss factor. Here, the content of the inorganic filler refers to a total mass of the inorganic fillers used, and when plural compounds are contained, it means a total content.

In addition, in the polyester resin composition constituting the fan, the content of the inorganic filler is preferably 5% by mass or more, more preferably 10% by mass or more, even more preferably 15% by mass or more, even more preferably 20% by mass or more, and even more preferably 23% by mass or more, from the viewpoint of improving flexural modulus, and the content is preferably 40% by mass or less, more preferably 35% by mass or less, and even more preferably 30% by mass or less, from the viewpoint of suppressing the lowering of loss factor.

In the present invention, the mass ratio of the component (B) to the inorganic filler (C) (component (B) / inorganic filler (C)) is preferably from 10/90 to 60/40, more preferably from 25/75 to 50/50, and even more preferably from 40/60 to 45/55, from the viewpoint of improving the elastic modulus and improving loss factor.

[Organic Crystal Nucleating Agent (D)]

In addition, the polyester resin composition constituting a fan of the present invention can contain an organic crystal nucleating agent, from the viewpoint of improving crystallization velocity of the polyester resin, improving crystallinity of the polyester resin, and improving flexural modulus.

As the organic crystal nucleating agent, known organic crystal nucleating agents can be used, and organic metal salts of carboxylic acids, organic sulfonates, carboxylic acid amides, metal salts of phosphorus-containing compounds, metal salts of rosins, alkoxy metal salts, and organic nitrogen-containing compounds, and the like can be used. Specifically, for example, the organic metal salts of carboxylic acids include sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanate, calcium octacosanate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexanecarboxylate. The organic sulfonates include sodium p-toluenesulfonate and sodium sulfoisophthalate. The carboxylic acid amides include stearamide, ethylenebis(lauric acid amide), palmitic acid amide, hydroxystearamide, erucic acid amide, and trimesic acid tris(t-butylamide). The metal salts of phosphorus-containing compounds include sodium-2,2'-methylenebis(4,6-di-t-butylphenyl) phosphate. The metal salts of rosins include sodium dehydroabietate and sodium dihydroabietate. The alkoxy metal salts include sodium 2,2-methylbis(4,6-di-t-butylphenyl). The organic nitrogen-containing compounds include ADK STAB NA-05 (trade name), manufactured by ADEKA. Other organic crystal nucleating agents include benzylidene sorbitol and derivatives thereof.

The content of the organic crystal nucleating agent (D), based on 100 parts by mass of the thermoplastic polyester resin (A), is preferably 0.01 parts by mass or more, more preferably 0.1 parts by mass or more, and even more preferably 0.2 parts by mass or more, from the viewpoint of improving flexural modulus and loss factor, and the content is preferably 20 parts by mass or less, more preferably 10 parts by mass or less, even more preferably 5 parts by mass or less, even more preferably 3 parts by mass or less, and even more preferably 1 part by mass or less, from the viewpoint of improving flexural modulus and loss factor. Here, in the present specification, the content of the organic crystal nucleating agent means a total content of all the organic crystal nucleating agents contained in the polyester resin composition constituting the fan.

The polyester resin composition constituting a fan of the present invention can contain, as other components besides those mentioned above, a lubricant, an inorganic crystal nucleating agent, a hydrolysis inhibitor, a flame retardant, an antioxidant, a lubricant such as a hydrocarbon-based wax or an anionic surfactant, an ultraviolet absorbent, an antistatic agent, an anti-clouding agent, a photostabilizer, a pigment, a mildewproof agent, a bactericidal agent, a blowing agent, or the like, within the range that would not impair the effects of the present invention. In addition, other polymeric materials and other resin compositions can be contained within the range that would not inhibit the effects of the present invention.

The polyester resin composition constituting a fan of the present invention can be prepared without any particular limitations, so long as the composition contains a thermoplastic polyester resin (A), one or more members selected from the group consisting of plasticizers and elastomers (B), and an inorganic filler (C). For example, the polyester resin composition can be prepared by melt-kneading raw materials containing a thermoplastic polyester resin, one or more members selected from the group consisting of plasticizers and elastomers, and an inorganic filler, and further optionally various additives with a known kneader such as a closed kneader, a single-screw or twin-screw extruder, or an open roller-type kneader. After melt-kneading, the melt-kneaded product may be dried or cooled in accordance with a known method. The raw materials can also be subjected to melt-kneading after homogeneously mixing the raw materials with a Henschel mixer, a super mixer or the like in advance. Here, the melt-blending may be carried out in the presence of a supercritical gas in order to accelerate plasticity of the polyester resin when the raw materials are melt-blended.

The melt-kneading temperature cannot be unconditionally determined because the melt-kneading temperature depends upon the kinds of the thermoplastic polyester resin used, and the melt-kneading temperature is preferably 220°C or higher, more preferably 225°C or higher, and even more preferably 230°C or higher, and preferably 300°C or lower, more preferably 290°C or lower, even more preferably 280°C or lower, even more preferably 260°C or lower, even more preferably 250°C or lower, and even more preferably 240°C or lower, from the viewpoint of improving moldability and prevention of deterioration of the fan. The melt-kneading time cannot be unconditionally determined because the melt-kneading time depends upon a melt-kneading temperature and the kinds of a kneader, and the melt-kneading time is preferably from 15 to 900 seconds.

The kneaded product thus obtained has excellent vibration-damping property even though flexural modulus is high, so that the kneaded product can be suitably used as manufactured articles such as audio equipment, electric appliances, construction buildings, and industrial equipment, or parts thereof, by using various mold-processing methods such as injection molding, extrusion molding or thermoforming. In addition, since the fan of the present invention has a

high flexural modulus even as a single material, the fan has an excellent vibration-damping property of being capable of sufficiently keeping the shape with a single material without having to use a high-rigidity material such as a metal steel plate, and can be preferably used in manufactured articles that are required to be light-weighted of automobiles, railcars, airplanes, or the like, or parts thereof. In other words, in the present invention, a polyester resin composition containing a thermoplastic polyester resin (A), one or more members selected from the group consisting of plasticizers and elastomers (B), and an inorganic filler (C) can be used as a material for the fan. Here, the fan of the present invention may contain a known material which is applicable to the fan other than the polyester resin composition mentioned above, and the content, the applicable locations, and the application method can be appropriately set in accordance with a conventional method in the art.

Furthermore, when the fan is rotated, the rotation noises such as rotation vibration sounds and interference noises become large, at the frequency calculated from the number of rotations and the number of fan blades. In addition, even at the frequency derived from the rotations and vibrations of the motor (examples thereof include cogging frequency, etc.), all sorts of noises such as rotation noises and vibration sounds of structural members become large. When the frequency of the rotation noises or the frequency of the vibration sounds of the structural members overlaps with the resonance frequency of the fan molded article or structural member and overall structure, vibration sounds or noises are considered to become even larger. However, the use of the fan of the present invention can reduce the vibrations or noises. Here, the natural frequency as used herein may be referred to as resonance frequency.

For example, supposing that the number of rotations of the fan is N, the number of fan blades is Z, the noises may increase at rotation noise peaks in multiples of integers of a frequency F = NZ/60, wherein F = NZk/60, and k is an integer of 1, 2, 3, and on. The use of the fan of the present invention remarkably exhibits noise-reducing effects.

The fan of the present invention is a concept that embraces not only the part of the fan blades, but also structural members near the fan, for example, fan covers, fan casings, motor covers, ducts, baffle plates, bell mouse, hoods, and the like. Therefore, the materials for the fan blades are conventional plastics, and an embodiment where a material for a fan casing is a polyester composition in the present invention also falls under the fan of the present invention, which exhibits excellent effects of vibration-damping property.

The application of the fan of the present invention to manufactured articles such as audio equipment, electric appliances, transportation vehicles, construction buildings, and industrial equipment, or parts or housings thereof can be appropriately set according to the methods for producing parts, housings, apparatuses, and equipment, applied parts, and intended purposes, and the fan can be used in accordance with a conventional method in the art.

For example, when the fan of the present invention is produced by injection molding, the fan is obtained by filling pellets of the above polyester resin composition constituting the fan in an injection-molding machine, and injecting molten pellets into a mold to mold.

In the injection molding, a known injection-molding machine can be used, including, for example, a machine comprising a cylinder and a screw inserted through an internal thereof as main constituting elements, e.g. J75E-D, J1 10AD-180H manufactured by The Japan Steel Works, Ltd. or the like. Here, although the raw materials for the above-mentioned polyester resin composition constituting the fan may be supplied to a cylinder and directly melt-kneaded, it is preferable that a product previously melt-kneaded is filled in an injection-molding machine.

The set temperature of the cylinder is preferably 220°C or higher, and more preferably 230°C or higher. Also, the set temperature is preferably 290°C or lower, more preferably 280°C or lower, even more preferably 270°C or lower, and even more preferably 260°C or lower. When the melt-kneader is used, the set temperature means the set temperature of the cylinder of the kneader during melt-kneading. Here, the cylinder comprises some heaters, by which temperature control is carried out. The number of heaters cannot be unconditionally determined because the number depends on the kinds of machines, and it is preferable that the heaters controlled to the above-mentioned set temperature are present at least at the discharge outlet side of the melt-kneaded product, i.e. the side of tip end of nozzle.

The mold temperature is preferably 150°C or lower, more preferably 140°C or lower, and even more preferably 130°C or lower, from the viewpoint of improving the crystallization velocity of the polyester resin composition constituting the fan and improving operability. Also, the mold temperature is preferably 20°C or higher, more preferably 30°C or higher, and even more preferably 40°C or higher. The holding time inside the mold cannot be unconditionally determined because the holding time differs depending upon the temperature of the mold. The holding time is preferably from 5 to 100 seconds, from the viewpoint of improving productivity of the molded article.

The fan of the present invention thus obtained can be applied to manufactured articles having various kinds of fan, including, for example, household electric appliances with compressors such as microwave ovens and refrigerators; cooling fan devices set to housing cases for electronic equipment such as electronic cameras, image recorder-player devices, computers, and projectors; cooling fan devices for dissipating heat such as radiators and condensers for air-conditioning devices for automobiles or cooling fan or ventilation fan devices such as ventilators, electric fans, and air conditioners; motor covers for electric appliances; audio equipment such as speakers, television, radio cassette recorders, headphones, and audio components; and construction materials for soundproof walls and pipe ducts.

The polyester resin composition constituting a fan of the present invention can be used, besides the fan, for

speakers, television, radio cassette recorders, headphones, audio components, microphones, audio players, compact disc players, floppy(registered trademark), video players, etc. as materials for audio equipment housings; further electromotive tools such as electromotive drills and electromotive drivers, electric appliances with cooling fans such as computers, projectors, servers, and POS systems, washing machines, clothes dryers, air-conditioned indoor units, sewing machines, dishwashers, fan heaters, multifunctional photocopier machines, printers, scanners, hard disk drives, video cameras, humidifiers, air cleaners, cellular phones, dryers, etc. as materials for parts and housings of electric appliances with electromotive motors; electromotive toothbrushes, electromotive shavers, massaging machines, etc. as materials for parts and housings of vibrated source-containing electric appliances; generators, gas generators, etc. as materials for parts and housings of electric appliances with motors; refrigerators, automatic vending machines, air-conditioned external machines, dehumidifiers, domestic generators etc. as materials for parts and housings of electric appliances with compressors; materials for interior materials such as dashboards, instrumental panels, floor, doors, and roofs, engine-related materials such as oil pans, front cover, and locker cover, car navigation, door trim, gear box, dash silencer, module carrier, etc. as materials for automobile parts; soundproof plates, road lighting luminaires, ETC (Electronic Toll Collection) facility members, etc. as materials for roads; interior materials such as floor, walls, side plates, ceiling, doors, chairs, and tables, housings or parts of motor-related area, gear case, pantagraph covers, various protective covers, etc. as materials for railcar parts; interior materials such as floor, walls, side plates, ceiling, chairs, and tables, housings or parts in the engine-related parts etc. as materials for airplane parts; housings or wall materials for engine room, housings or wall materials for instrumental measurement room, as materials for ship parts; walls, ceiling, floor, partition boards, soundproof walls, shutters, curtain rails, pipe ducts, staircases, doors, window frames, etc. as materials for construction; shooters, elevators (lifts), winches or hoists, escalators, conveyors, tractors, bulldozers, lawn mowers, etc. as materials for industrial equipment parts; respiratory organ-associated equipment, ear, nose and throat (ENT)-associated equipment, dental equipment, surgical equipment, etc. as materials for parts and housing of medical equipment, and the like.

As to the fan of the embodiment of the present application, the kinds of the fan include centrifugal fan such as sirocco fan or turbo fan, side flow fan such as cross flow fan, axial flow fan such as mixed-flow fan and propeller fan, those rotated and driven by electric generators driven by direct current or alternating current, and the like.

The shapes of the fan blades are diversified depending upon the kinds and applications, and examples are those having simple cross-sectional shapes such as arc shape and S-shape, and those with nature wings that have complicated shapes, such as those having "constrictions (narrowness in mid area)" or "waviness" as in wings of albatross or wings of butterflies, and those having less frictional resistance as in wings of dragonflies.

The sizes of the fan are diversified depending upon the kinds and the applications, and the size includes, for example, an outer shape diameter $\Phi$ of from 10 mm to 10,000 mm. The sizes of the blades are such that the length is from 10 mm to 10,000 mm, and the width is from 10 mm to 10,000 mm.

The frequency at which the vibration-damping effects are remarkably seen differs depending upon the size of the fan. For example, in fan having a size of 300 mm or larger, a central face would be large and blades themselves are large, so that the face itself becomes large, whereby even greater noises are generated. When even greater noises are generated, it is considered that the effects are greater than a case where a vibration-damping material is used. Also, when a central face is large or a length or width against a thickness of the blades is large, it is anticipated that the resonance frequency of the fan exists in a low-frequency side; therefore, low-frequency noises are generated, whereby it is anticipated that low-frequency noises can be reduced as the effects when using the vibration-damping material. On the other hand, in a fan having a size of, for example, smaller than 300 mm, it is anticipated that the resonance frequency of the fan exists in a high-frequency side; therefore, high-frequency noises are generated, whereby it is anticipated that high-frequency noises can be reduced as the effects when using the vibration-damping material.

The number of fan blades is diversified depending upon the kinds and applications, and the number may be as small as from 2 to 4 as in a propeller fan, and up to as many as 1,000 as in a sirocco fan.

When the number of blades (Z) is small, for example, 10 or less, it is anticipated that the frequency of rotation noises derived from $F = NZk/60$ exists in a low frequency side; therefore, low-frequency noises are generated, so that it is anticipated that mainly low-frequency noises can be reduced as the effects when using the vibration-damping material.

When the number of blades (Z) is large, for example, exceeding 20, it is anticipated that the frequency of rotation noises derived from $F = NZk/60$ exists in a high frequency side; therefore, high-frequency noises are generated, so that it is anticipated that mainly high-frequency noises can be reduced as the effects when using the vibration-damping material.

The conditions for the number of rotations using fan are diversified depending upon applications, ranging from those with a smaller number of rotations of 20 rpm to a larger number of rotations of 50,000 rpm.

When the number of rotations (N) is small, for example, 500 rpm or less, it is anticipated that the frequency of rotation noises derived from $F = NZk/60$ exists in a low frequency side; therefore, low-frequency noises are generated, so that it is anticipated that mainly low-frequency noises can be reduced as the effects when using the vibration-damping material.

When the number of rotations (N) is large, for example, exceeding 1,000 rpm, it is anticipated that the frequency of rotation noises derived from F = NZk/60 exists in a high frequency side; therefore, high-frequency noises are generated, so that it is anticipated that mainly high-frequency noises can be reduced as the effects when using the vibration-damping material.

In addition, generally the frequency at which the noises are increased includes frequency of peaks of rotation noises derived from F = NZk/60, frequency derived from rotations or vibrations of the motor, resonance frequency of the fan, resonance frequency of the structural members, and the like.

Also, the frequency at which noise reduction is markedly exhibited includes frequency of peaks of rotation noises derived from F = NZk/60, frequency derived from rotations or vibrations of the motor, the resonance frequency of the fan, the resonance frequency of the structural members, and the like.

Further, the noises are markedly increased when each of the frequency of peaks of rotation noises derived from F = NZk/60 or the frequency derived from rotations or vibrations of the motor mentioned above overlaps with the resonance frequency of the fan or the resonance frequency of the structural members, and moreover, noise reduction is exhibited when the fan of the present invention is used.

In addition, as the fan, when the rigidity such as elastic modulus or strength becomes higher, the amount of winds during the fan rotations can be increased. Also, as the fan, when the weight becomes smaller, the electric power consumption during the fan rotations can be reduced.

The overall structure of the fan includes diversified cases including a case where a fan is not provided with a cover, as a matter of course, a case where a fan is provided with a cover, a case where a vibration source such as a motor is covered, and a case where the vibration source is not covered. When covered, the vibration sounds are increased at the resonance frequency of the overall structure, so that it is considered that the effects according to the present invention are large.

In order to realize reduction of fan noises, at least one of suppression of vibrations of blades themselves of the fan, suppression of vibrations of structural members in the periphery of the fan, including, for example, a fan cover, a fan casing, a motor cover, a duct, a baffle plate, bell mouse, hood, or the like, suppression of vibrations derived from motors rotating the fan, suppression of vibrations derived from housing of motors or the like may be accomplished.

The present invention also provides a manufactured article containing a fan of the present invention, and a method for producing a part or housing thereof.

The method for production is not particularly limited so long as the method includes the step of injection-molding a polyester resin composition constituting a fan of the present invention, and steps can be appropriately added depending upon the kinds of the molded articles obtained.

Specifically, the embodiment includes the following steps:

step (1): melt-kneading a polyester resin composition containing a thermoplastic polyester resin (A), one or more members selected from the group consisting of plasticizers and elastomers (B), and an inorganic filler (C) to prepare a melt-kneaded product of a polyester resin composition; and

step (2): injection-molding a melt-kneaded product of the polyester resin composition obtained in the step (1) within a mold.

The step (1) is a step to provide a melt-kneaded product of a polyester resin composition. Specifically, a melt-kneaded product can be prepared by melt-kneading raw materials containing a thermoplastic polyester resin (A), one or more members selected from the group consisting of plasticizers and elastomers (B), and an inorganic filler (C), and optionally various additives at a temperature of preferably 220°C or higher, more preferably 225°C or higher, and even more preferably 230°C or higher, and preferably 300°C or lower, more preferably 290°C or lower, even more preferably 280°C or lower, even more preferably 260°C or lower, even more preferably 250°C or lower, and even more preferably 240°C or lower.

The step (2) is a step of injection-molding a melt-kneaded product of the polyester resin composition. Specifically, a melt-kneaded product obtained in the step (1) can be molded by filling into an injection-molding machine equipped with a cylinder previously heated to preferably 220°C or higher, and more preferably 230°C or higher, and preferably 290°C or lower, more preferably 280°C or lower, even more preferably 270°C or lower, and even more preferably 260°C or lower, and injecting into a mold at a temperature of preferably 150°C or lower, more preferably 140°C or lower, and even more preferably 130°C or lower, and preferably 20°C or higher, more preferably 30°C or higher, and even more preferably 40°C or higher. It is preferable that the mold has blade shapes of fan.

The fan of the present invention thus obtained can be suitably used in a vibration-damping material or a manufactured article having vibration-soundproof property, or a part or housing thereof.

With respect to the above-mentioned embodiments, the present invention further discloses the following fan, methods for preventing vibration noises using a fan, and use of fan.

<1> A fan containing a polyester resin composition containing:

a thermoplastic polyester resin (A) constituted of a dicarboxylic acid component and a diol component,
one or more members selected from the group consisting of plasticizers and elastomers (B), and
an inorganic filler (C).

<2> The fan according to the above <1>, wherein the dicarboxylic acid component constituting the thermoplastic polyester resin (A) is one or more members selected from the group consisting of aliphatic dicarboxylic acids, alicyclic dicarboxylic acids, aromatic dicarboxylic acids, and dicarboxylic acids having a furan structure.
<3> The fan according to the above <1> or <2>, wherein the diol component constituting the thermoplastic polyester resin (A) is one or more members selected from the group consisting of aliphatic diols, alicyclic diols, aromatic diols, and diols having a furan ring.
<4> The fan according to any one of the above <1> to <3>, wherein in a case where the dicarboxylic acid component constituting the thermoplastic polyester resin (A) is one or more members selected from the group consisting of aromatic dicarboxylic acids, alicyclic dicarboxylic acids, and dicarboxylic acids having a furan, preferred are combinations thereof with one or more members selected from the group consisting of aliphatic diols, aromatic diols, alicyclic diols, and diols having a furan ring, and more preferred are combinations thereof with one or more members selected from the group consisting of aliphatic diols and aromatic diols.
<5> The fan according to any one of the above <1> to <3>, wherein in a case where the dicarboxylic acid component constituting the thermoplastic polyester resin (A) is an aliphatic dicarboxylic acid, preferred are combinations thereof with one or more members selected from the group consisting of aromatic diols, alicyclic diols, and diols having a furan ring, and more preferred are combinations thereof with one or more aromatic diols.
<6> The fan according to any one of the above <1> to <5>, wherein the dicarboxylic acid component constituting the thermoplastic polyester resin (A) is preferably one or more members selected from the group consisting of succinic acid, glutaric acid, adipic acid, cyclohexanedicarboxylic acid, terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, and 2,5-furandicarboxylic acid, more preferably one or more members selected from the group consisting of succinic acid, cyclohexanedicarboxylic acid, terephthalic acid, isophthalic acid, 2,6-naphthalenedicarboxylic acid, and 2,5-furandicarboxylic acid, and even more preferably one or more members selected from the group consisting of terephthalic acid and 2,5-furandicarboxylic acid.
<7> The fan according to any one of the above <1> to <6>, wherein the diol component constituting the thermoplastic polyester resin (A) is preferably one or more members selected from the group consisting of ethylene glycol, 1,3-propanediol, 1,4-butanediol, cyclohexanedimethanol, hydrogenated bisphenol A, isosorbide, bisphenol A, an alkylene oxide adduct of bisphenol A, 1,3-benzenedimethanol, 1,4-benzenedimethanol, and 2,5-dihydroxyfuran, and more preferably one or more members selected from the group consisting of ethylene glycol, 1,3-propanediol, 1,4-butanediol, cyclohexanedimethanol, hydrogenated bisphenol A, and 2,5-dihydroxyfuran.
<8> The fan according to any one of the above <1> to <7>, wherein the thermoplastic polyester resin (A) has a glass transition temperature (Tg) of preferably 20°C or higher, more preferably 25°C or higher, even more preferably 30°C or higher, and still even more preferably 35°C or higher, and preferably 160°C or less, more preferably 150°C or less, even more preferably 140°C or less, and still even more preferably 130°C or less.
<9> The fan according to any one of the above <1> to <8>, wherein the thermoplastic polyester resin (A) has crystallization enthalpy ΔHmc obtained from areas of exothermic peaks along with crystallinity of preferably 5 J/g or more, more preferably 10 J/g or more, even more preferably 15 J/g or more, and even more preferably 30 J/g or more, when a resin is heated from 25°C to 300°C at a heating rate of 20°C/min, held in that state for 5 minutes, and thereafter cooled to 25°C or lower at a rate of -20°C/min.
<10> The fan according to any one of the above <1> to <9>, wherein the thermoplastic polyester resin (A) is preferably a polyethylene terephthalate constituted of terephthalic acid and ethylene glycol, a polytrimethylene terephthalate constituted of terephthalic acid and 1,3-propanediol, a polybutylene terephthalate constituted of terephthalic acid and 1,4-butanediol, 1,4-cyclohexanedimethylene terephthalate constituted of terephthalic acid and 1,4-cyclohexanedimethanol, polyethylene naphthalate constituted of 2,6-naphthalenedicarboxylic acid and ethylene glycol, a polybutylene naphthalate constituted of 2,6-naphthalenedicarboxylic acid and 1,4-butanediol, a polyethylene furanoate constituted of 2,5-furandicarboxylic acid and ethylene glycol, and a polybutylene furanoate constituted of 2,5-furandicarboxylic acid and 1,4-butanediol, and more preferably a polyethylene terephthalate constituted of terephthalic acid and ethylene glycol, a polytrimethylene terephthalate constituted of terephthalic acid and 1,3-propanediol, a polybutylene terephthalate constituted of terephthalic acid and 1,4-butanediol, a polyethylene naphthalate constituted of 2,6-naphthalenedicarboxylic acid and ethylene glycol, and a polyethylene furanoate constituted of 2,5-furandicarboxylic acid and ethylene glycol.
<11> The fan according to any one of the above <1> to <10>, wherein the content of the thermoplastic polyester

resin (A) in the polyester resin composition constituting the fan is preferably 50% by mass or more, more preferably 55% by mass or more, and even more preferably 60% by mass or more, and preferably 90% by mass or less, more preferably 80% by mass or less, even more preferably 75% by mass or less, and even more preferably 70% by mass or less.

<12> The fan according to any one of the above <1> to <11>, wherein it is preferable that the plasticizer contains one or more members selected from the group consisting of polyester-based plasticizers, polyhydric alcohol ester-based plasticizers, polycarboxylic acid ester-based plasticizers, and compounds represented by the general formula (I).

<13> The fan according to any one of the above <1> to <12>, wherein the plasticizer preferably contains one or more members selected from the group consisting of polyester-based plasticizers, polyhydric alcohol ester-based plasticizers, polycarboxylic acid ester-based plasticizers, and compounds represented by the general formula (I), each having a (poly)oxyalkylene group or an alkylene group having from 2 to 10 carbon atoms, and more preferably one or more members selected from the group consisting of polyester-based plasticizers, polyhydric alcohol ester-based plasticizers, polycarboxylic acid ester-based plasticizers, and compounds represented by the general formula (I), each having a (poly)oxyalkylene group.

<14> The fan according to any one of the above <1> to <13>, wherein the plasticizer preferably contains one or more members selected from the group consisting of the following Compound Groups (A) to (C), and more preferably one or more members selected from the group consisting of the following Compound Groups (A) and (B):

Compound Group (A): an ester compound having two or more ester groups in the molecule, wherein at least one kind of the alcohol component constituting the ester compound is an adduct of an alcohol reacted with an alkylene oxide having from 2 to 3 carbon atoms in an amount of from 0.5 to 5 mol on average, per one hydroxyl group;

Compound Group (B): a compound represented by the formula (II):

$$R^5O\text{-}CO\text{-}R^6\text{-}CO\text{-}[(OR^7)_mO\text{-}CO\text{-}R^6\text{-}CO\text{-}]_nOR^5 \qquad \text{(II)}$$

wherein $R^5$ is an alkyl group having from 1 to 4 carbon atoms; $R^6$ is an alkylene group having from 2 to 4 carbon atoms; $R^7$ is an alkylene group having from 2 to 6 carbon atoms, m is the number of from 1 to 6, and n is the number of from 1 to 12, with proviso that all of $R^6$'s may be identical or different, and that all of $R^7$'s may be identical or different; and Compound Group (C): an ester compound having two or more ester groups in the molecule, wherein the alcohol component constituting the ester compound is a mono-alcohol.

<15> The fan according to any one of the above <12> to <14>, wherein the content of one or more members selected from the group consisting of polyester-based plasticizers, polyhydric alcohol ester-based plasticizers, polycarboxylic acid ester-based plasticizers, and compounds represented by the general formula (I), preferably the content of one or more members selected from the group consisting of polyester-based plasticizers, polyhydric alcohol ester-based plasticizers, polycarboxylic acid ester-based plasticizers, and compounds represented by the general formula (I), each having a (poly)oxyalkylene group or an alkylene group having from 2 to 10 carbon atoms, more preferably the content of one or more members selected from the group consisting of polyester-based plasticizers, polyhydric alcohol ester-based plasticizers, polycarboxylic acid ester-based plasticizers, and compounds represented by the general formula (I), each having a (poly)oxyalkylene group, and the content of one or more compounds selected from the group consisting of Compound Groups (A) to (C) mentioned above, is preferably 50% by mass or more, more preferably 80% by mass or more, even more preferably 90% by mass or more, even more preferably 95% by mass or more, even more preferably substantially 100% by mass, and even more preferably 100% by mass, of the plasticizer.

<16> The fan according to any one of the above <1> to <15>, wherein the content of the plasticizer, based on 100 parts by mass of the thermoplastic polyester resin (A), is preferably 1 part by mass or more, more preferably 3 parts by mass or more, even more preferably 5 parts by mass or more, even more preferably 10 parts by mass or more, even more preferably 15 parts by mass or more, and even more preferably 18 parts by mass or more, and preferably 50 parts by mass or less, more preferably 40 parts by mass or less, even more preferably 30 parts by mass or less, and even more preferably 25 parts by mass or less.

<17> The fan according to any one of the above <1> to <16>, wherein the content of the plasticizer in the polyester resin composition constituting the fan is preferably 1% by mass or more, more preferably 3% by mass or more, even more preferably 5% by mass or more, and still even more preferably 10% by mass or more, and preferably 25% by mass or less, more preferably 20% by mass or less, and even more preferably 15% by mass or less.

<18> The fan according to any one of the above <1> to <17>, wherein the elastomer is a block copolymer having polystyrene blocks at both ends, and at least one block of a polyisoprene block or a vinyl-polyisoprene block therebetween.

<19> The fan according to any one of the above <1> to <18>, wherein the elastomer is preferably a polystyrene-isoprene block copolymer, a polystyrene-polybutadiene copolymer, a polystyrene-hydrogenated polybutadiene copolymer, a polystyrene-hydrogenated polyisoprene-polystyrene block copolymer, a polystyrene-vinyl-polyisoprene-polystyrene block copolymer, a polystyrene-hydrogenated polybutadiene-hydrogenated polyisoprene-polystyrene block copolymer, or a polystyrene-hydrogenated polybutadiene-polyisoprene-polystyrene block copolymer, and more preferably a polystyrene-vinyl-polyisoprene-polystyrene block copolymer.

<20> The fan according to any one of the above <1> to <19>, wherein the styrene content in the elastomer is preferably 10% by mass or more, and more preferably 15% by mass or more, and preferably 30% by mass or less, and more preferably 25% by mass or less.

<21> The fan according to any one of the above <1> to <20>, wherein the elastomer has a glass transition temperature Tg of preferably -40°C or higher and preferably 20°C or lower.

<22> The fan according to any one of the above <1> to <21>, wherein the content of the elastomer, based on 100 parts by mass of the thermoplastic polyester resin (A), is preferably 10 parts by mass or more, more preferably 15 parts by mass or more, even more preferably 18 parts by mass or more, even more preferably 20 parts by mass or more, and even more preferably 25 parts by mass or more, and preferably 50 parts by mass or less, more preferably 40 parts by mass or less, and even more preferably 35 parts by mass or less.

<23> The fan according to any one of the above <1> to <22>, wherein the content of the elastomer in the polyester resin composition constituting the fan is preferably 5% by mass or more, more preferably 10% by mass or more, and even more preferably 15% by mass or more, and preferably 30% by mass or less, more preferably 25% by mass or less, and even more preferably 20% by mass or less.

<24> The fan according to any one of the above <1> to <23>, wherein the plasticizer and the elastomer may be used together, or the plasticizer which may be used alone or in two or more kinds, can be used in a combination with an elastomer which may be used alone or in two or more kinds.

<25> The fan according to any one of the above <1> to <23>, wherein the plasticizer, alone or in two or more kinds, can be used in combination with a styrene-isoprene block copolymer, alone or in two or more kinds.

<26> The fan according to any one of the above <1> to <23>, wherein the plasticizer, alone or in two or more kinds, can be used in combination with a styrene-butadiene block copolymer, alone or in two or more kinds.

<27> The fan according to any one of the above <1> to <23>, wherein the plasticizer, alone or in two or more kinds, a styrene-butadiene block copolymer, alone or in two or more kinds, and a styrene-isoprene block copolymer, alone or in two or more kinds can be used in combination.

<28> The fan according to the above <24>, wherein a total content of the plasticizer and the elastomer, based on 100 parts by mass of the thermoplastic polyester resin (A), is preferably 15 parts by mass or more, more preferably 20 parts by mass or more, and even more preferably 25 parts by mass or more, and preferably 60 parts by mass or less, more preferably 50 parts by mass or less, and even more preferably 40 parts by mass or less.

<29> The fan according to the above <24> or <28>, wherein the mass ratio of the plasticizer to the elastomer, i.e. plasticizer/elastomer, is preferably from 30/70 to 70/30, and more preferably from 40/60 to 60/40.

<30> The fan according to any one of the above <1> to <29>, wherein it is preferable that the inorganic filler (C) contains one or more members selected from the group consisting of plate-like fillers, granular fillers, acicular fillers, and fibrous fillers.

<31> The fan according to the above <30>, wherein the plate-like filler is those having an aspect ratio (length of the longest side of the largest surface of the plate-like filler/thickness of the surface) of 20 or more and 150 or less, and wherein the plate-like filler is preferably glass flake, non-swellable mica, swellable mica, graphite, metal foil, talc, clay, mica, sericite, zeolite, bentonite, organic modified bentonite, montmorillonite, organic modified montmorillonite, dolomite, smectite, hydrotalcite, plate-like iron oxide, plate-like calcium carbonate, plate-like magnesium hydroxide, and plate-like barium sulfate, more preferably talc, mica, and plate-like barium sulfate, and even more preferably talc and mica.

<32> The fan according to the above <30>, wherein the granular fillers are those having an aspect ratio (longest diameter of the granular filler/shortest diameter of the granular filler) of 1 or more and less than 2, and preferably an aspect ratio of nearly 1, and wherein the granular filler is preferably kaolin, fine silicic acid powder, feldspar powder, granular calcium carbonate, granular magnesium hydroxide, granular barium sulfate, aluminum hydroxide, magnesium carbonate, calcium oxide, aluminum oxide, magnesium oxide, titanium oxide, aluminum silicate, various balloons, various beads, silicon oxide, gypsum, novaculite, dawsonite, and white clay, more preferably granular barium sulfate, aluminum hydroxide, and granular calcium carbonate, and even more preferably granular calcium carbonate and granular barium sulfate.

<33> The fan according to the above <30>, wherein the acicular filler is those having an aspect ratio (particle length/particle size) within the range of 2 or more and less than 20, and wherein the acicular filler is preferably potassium titanate whiskers, aluminum borate whiskers, magnesium-based whiskers, silicon-based whiskers, wollastonite, sepiolite, asbestos, zonolite, phosphate fibers, ellestadite, slag fibers, gypsum fibers, silica fibers, silica alumina fibers, zirconia fibers, boron nitride fibers, silicon nitride fibers, and boron fibers, and more preferably potassium titanate whiskers and wollastonite.

<34> The fan according to the above <30>, wherein the fibrous filler is those having an aspect ratio (average fiber length/average fiber diameter) of exceeding 150, and wherein the fibrous filler is preferably glass fibers, carbon fibers, graphite fibers, metal fibers, and cellulose fibers, more preferably carbon fibers and glass fibers, and even more preferably glass fibers.

<35> The fan according to any one of the above <30> to <33>, wherein the granular, plate-like, or acicular filler may be subjected to a coating or binding treatment with a thermoplastic resin such as an ethylene/vinyl acetate copolymer, or with a thermosetting resin such as an epoxy resin, or the filler may be treated with a coupling agent such as amino silane or epoxy silane.

<36> The fan according to any one of the above <1> to <35>, wherein the inorganic filler (C) is preferably one or more members selected from the group consisting of plate-like fillers, acicular fillers, and fibrous fillers, more preferably one or more members selected from the group consisting of plate-like fillers and acicular fillers, and even more preferably one or more members of plate-like fillers.

<37> The fan according to any one of the above <1> to <36>, wherein mica, talc, and glass fibers are preferably used, mica and talc are more preferably used, and mica is even more preferably used.

<38> The fan according to any one of the above <30> to <37>, wherein the content of the plate-like filler is preferably 60% by mass or more, more preferably 80% by mass or more, and even more preferably 90% by mass or more, of the inorganic filler (C).

<39> The fan according to any one of the above <1> to <38>, wherein the content of the inorganic filler (C), based on 100 parts by mass of the thermoplastic polyester resin (A), is preferably 10 parts by mass or more, more preferably 15 parts by mass or more, even more preferably 20 parts by mass or more, even more preferably 30 parts by mass or more, and even more preferably 35 parts by mass or more, and preferably 80 parts by mass or less, more preferably 70 parts by mass or less, even more preferably 60 parts by mass or less, even more preferably 50 parts by mass or less, and even more preferably 45 parts by mass or less.

<40> The fan according to any one of the above <1> to <39>, wherein in the polyester resin composition constituting the fan, the content of the inorganic filler is preferably 5% by mass or more, more preferably 10% by mass or more, even more preferably 15% by mass or more, even more preferably 20% by mass or more, and even more preferably 23% by mass or more, and preferably 40% by mass or less, more preferably 35% by mass or less, and even more preferably 30% by mass or less.

<41> The fan according to any one of the above <1> to <40>, wherein the mass ratio of the component (B) to the inorganic filler (C) (component (B) / inorganic filler (C)) is preferably from 10/90 to 60/40, more preferably from 25/75 to 50/50, and even more preferably from 40/60 to 45/55.

<42> The fan according to any one of the above <1> to <41>, further containing an organic crystal nucleating agent (D).

<43> The fan according to the above <42>, wherein the content of the organic crystal nucleating agent (D), based on 100 parts by mass of the thermoplastic polyester resin (A), is preferably 0.01 parts by mass or more, more preferably 0.1 parts by mass or more, and even more preferably 0.2 parts by mass or more, and preferably 20 parts by mass or less, more preferably 10 parts by mass or less, even more preferably 5 parts by mass or less, even more preferably 3 parts by mass or less, and even more preferably 1 part by mass or less.

<44> The fan according to any one of the above <1> to <43>, wherein the polyester resin composition constituting the fan is prepared by melt-kneading raw materials containing

a thermoplastic polyester resin (A),

one or more members selected from the group consisting of plasticizers and elastomers (B), and

an inorganic filler (C).

<45> The fan according to the above <44>, wherein the melt-kneading temperature is preferably 220°C or higher, more preferably 225°C or higher, and even more preferably 230°C or higher, and preferably 300°C or lower, more preferably 290°C or lower, even more preferably 280°C or lower, even more preferably 260°C or lower, even more preferably 250°C or lower, and even more preferably 240°C or lower.

<46> Use of a fan as defined in the above <1> to <45> as a vibration-damping material.

<47> A manufactured article such as audio equipment, electric appliances, transportation vehicles, construction buildings, and industrial equipment, obtainable by a method including filling a polyester resin composition constituting a fan as defined in any one of the above <1> to <45> in an injection-molding machine, and injecting the polyester resin composition into a mold to mold, or parts or housing thereof.

<48> A motor cover for electric appliances containing a polyester resin composition usable in any one of the above <1> to <45>.

<49> An air conditioner containing a polyester resin composition usable in any one of the above <1> to <45>.

<50> A speaker containing a polyester resin composition usable in any one of the above <1> to <45>.

<51> A projector containing a polyester resin composition usable in any one of the above <1> to <45>.
<52> An electric appliance attached with compressors containing a polyester resin composition usable in any one of the above <1> to <45>.
<53> A pipe containing a polyester resin composition usable in any one of the above <1> to <45>.
<54> A method for reducing vibration noises generated by a motor cover for electric appliances, characterized by the use of a polyester resin composition as defined in any one of the above <1> to <45>.
<55> A method for reducing vibration noises generated by an air conditioner, characterized by the use of a polyester resin composition as defined in any one of the above <1> to <45>.
<56> A method for reducing vibration noises generated by a speaker, characterized by the use of a polyester resin composition as defined in any one of the above <1> to <45>.
<57> A method for reducing vibration noises generated by a projector, characterized by the use of a polyester resin composition as defined in any one of the above <1> to <45>.
<58> A method for reducing vibration noises generated by an electric appliance attached with compressors, characterized by the use of a polyester resin composition as defined in any one of the above <1> to <45>.
<59> A method for reducing vibration noises generated by a pipe, characterized by the use of a polyester resin composition as defined in any one of the above <1> to <45>.
<60> A method for producing a part or housing comprising a fan, including the steps of:

step (1): melt-kneading a polyester resin composition containing a thermoplastic polyester resin (A), one or more members selected from the group consisting of plasticizers and elastomers (B), and an inorganic filler (C), to provide a melt-kneaded product of the polyester resin composition; and
step (2): injection-molding the melt-kneaded product of the polyester resin composition obtained in the step (1) in a mold.

<61> The fan according to any one of the above <1> to <45>, further containing a styrene-butadiene block copolymer.
<62> The fan according to any one of the above <1> to <45>, wherein the fan is any one of blades of fan, fan covers, fan casings, motor covers, ducts, baffle plates, bell mouse, and hoods.

## EXAMPLES

The present invention will be described more specifically by means of the following Examples. The examples are given solely for the purposes of illustration and are not to be construed as limitations of the present invention. Parts in Examples are parts by mass unless specified otherwise. Here, "ambient pressure" means 101.3 kPa, and "ambient temperature" means 25°C.

[Glass Transition Temperature of Thermoplastic Polyester Resin and Elastomer]

Using a DMA apparatus (EXSTAR6000, manufactured by SII), a flat test piece (40 mm × 5 mm × 0.4 mm) of the samples prepared in the same manner as described later is heated from -50°C to 250°C at a heating rate of 2°C/min at a measurement frequency of 1 Hz, and a peak temperature of the resulting loss modulus is obtained as a glass transition point.

[Crystallization Enthalpy of Thermoplastic Polyester Resin]

About 7 mg of a thermoplastic polyester resin sample is weighed, and using a DSC apparatus (DSC8500, manufactured by Perkin-Elmer), a crystallization enthalpy is calculated from exothermic peaks accompanying crystallization when the resin, as prescribed in JIS K7122 (1999), is heated from 25°C to 300°C at a heating rate of 20°C/min, held in that state for 5 minutes, and thereafter cooled to 25°C or lower at a rate of -20°C/min.

[Styrene Content of Elastomer]

An elastomer is dissolved in deuterated chloroform, and H-NMR spectrum of the sample solution is measured at an observation width of 15 ppm. In addition, previously, a calibration curve is obtained from peak areas and concentrations of styrene in the H-NMR spectrum of a polystyrene/deuterated chloroform solution for three kinds of concentrations, and a content of styrene is calculated from the peak areas of styrene in the sample solution using this calibration curve.

[Acid Value, Hydroxyl Value, and Saponification Value of Plasticizer]

Acid Value: The analysis is carried out in accordance with a test method as prescribed in JIS K 0070, except that toluene/ethanol = 2/1 (volume ratio) is used as a titration solvent.

Hydroxyl Value: The analysis is carried out in accordance with a test method as prescribed in JIS K 0070, except that acetic anhydride/pyridine = 1/4 (volume ratio) is used as an acetylation reagent, and that the amount is changed to 3 mL.

Saponification Value: The analysis is carried out in accordance with a test method as prescribed in JIS K 0070, except that the temperature of the water bath is changed to 95°C, and that the heating time is changed to one hour.

[Molecular Weight, Terminal Alkyl Esterification Percentage, and Ether Group Value of Ester Compound of (B) of Plasticizer]

Molecular Weight: The molecular weight of the ester compound of (B) as used herein means a number-average molecular weight, which is calculated according to the following formulas from an acid value, a hydroxyl value, and a saponification value:

$$\text{Average Molecular Weight M} = (M_1 + M_2 - M_3 \times 2) \times n + M_1 - (M_3 - 17.01) \times 2 + (M_3 - 17.01) \times p + (M_2 - 17.01) \times q + 1.01 \times (2 - p - q)$$

$$q = \text{Hydroxyl Value} \times M \div 56110$$

$$2 - p - q = \text{Acid Value} \times M \div 56110$$

$$\text{Average Degree of Polymerization n} = \text{Saponification Value} \times M \div (2 \times 56110) - 1$$

Terminal Alkyl Esterification Percentage: The alkyl esterification percentage at the molecular terminals, i.e. the terminal alkyl esterification percentage, can be calculated by the following formula. The larger the numerical value of the alkyl esterification percentage at the molecular terminals, the smaller the number of free carboxyl groups and free hydroxyl groups, showing that the molecular terminals are sufficiently subjected to alkyl esterification.

$$\text{Terminal Alkyl Esterification Percentage (\%)} = (p \div 2) \times 100$$

wherein $M_1$: a molecular weight of a diester obtained from a dicarboxylic acid used as a raw material and a monohydric alcohol used as a raw material;
$M_2$: a molecular weight of a dihydric alcohol used as a raw material;
$M_3$: a molecular weight of a monohydric alcohol used as a raw material;
p: the number of terminal alkyl ester groups in one molecule; and
q: the number of terminal hydroxyl groups in one molecule. Ether Group Value: The ether group value, which is the number of mmol of the ether groups in one gram of a carboxylic acid ester, is calculated in accordance with the following formula.

$$\text{Ether Group Value (mmol/g)} = (m - 1) \times n \times 1000 \div M$$

wherein m is an average number of repeats of oxyalkylene groups, i.e. m-1 stands for the number of ether groups in one molecule of the dihydric alcohol.

Incidentally, in a case where plural kinds of dicarboxylic acids, monohydric alcohols or dihydric alcohols are

used, a number-average molecular weight is used as the molecular weight.

Production Example 1 of Plasticizer - Diester Obtained from Succinic Acid and Triethylene Glycol Monomethyl Ether

A 3-L flask equipped with a stirrer, a thermometer, and a dehydration tube was charged with 500 g of succinic anhydride, 2,463 g of triethylene glycol monomethyl ether, and 9.5 g of paratoluenesulfonic acid monohydrate, and the contents were allowed to react at 110°C for 15 hours under a reduced pressure of from 4 to 10.7 kPa, while blowing nitrogen at 500 mL/min in a space portion. The liquid reaction mixture had an acid value of 1.6 mgKOH/g. To the liquid reaction mixture was added 27 g of an adsorbent KYOWAAD 500SH manufactured by Kyowa Chemical Industry Co., Ltd., and the mixture was stirred at 80°C and 2.7 kPa for 45 minutes, and filtered. Thereafter, triethylene glycol monomethyl ether was distilled off at a liquid temperature of from 115° to 200°C and a pressure of 0.03 kPa, and after cooling to 80°C, the residual liquid was filtered under a reduced pressure, to provide a diester obtained from succinic acid and triethylene glycol monomethyl ether as a filtrate. The diester obtained had an acid value of 0.2 mgKOH/g, a saponification value of 276 mgKOH/g, a hydroxyl value of 1 mgKOH/g or less, and a hue APHA of 200.

Production Example 2 of Plasticizer - Diester Obtained from Succinic Acid and 1,3-Propanediol and Methanol, Raw Materials (Molar Ratio): Dimethyl Succinate/1,3-Propanediol (1.5/1)

A four-necked flask equipped with a stirrer, a thermometer, a dropping funnel, a distillation tube, and a nitrogen blowing tube was charged with 521 g (6.84 mol) of 1,3-propanediol and 5.9 g of a 28% by mass sodium methoxide-containing methanol solution (sodium methoxide: 0.031 mol) as a catalyst, and methanol was distilled off, while stirring at 120°C and an ambient pressure for 0.5 hours. Thereafter, 1,500 g (10.26 mol) of dimethyl succinate manufactured by Wako Pure Chemical Industries, Ltd. was added dropwise thereto over 1 hour, and the contents were allowed to react at 120°C and an ambient pressure to distill off methanol formed by the reaction. Next, the temperature was cooled to 60°C, and 5.6 g of a 28% by mass sodium methoxide-containing methanol solution (sodium methoxide: 0.029 mol) was added thereto. The temperature was raised to 120°C over 2 hours, and the pressure was then gradually dropped from an ambient pressure to 3.7 kPa over 1 hour to distill off methanol. Thereafter, the temperature was cooled to 80°C, 18 g of KYOWAAD 600S manufactured by Kyowa Chemical Industry Co., Ltd. was added thereto, and the mixture was stirred at 80°C and a pressure of 4.0 kPa for 1 hour, and then filtered under a reduced pressure. The temperature of the filtrate was raised from 85° to 194°C at a pressure of 0.1 kPa over 2.5 hours to distill off the residual dimethyl succinate, to provide a yellow liquid at an ambient temperature. Here, the amount of the catalyst used was 0.58 mol per 100 mol of the dicarboxylic acid ester (in the formula (II), $R^5$: methyl, $R^6$: ethylene, $R^7$: 1,3-propylene, m=1, n=4.4; acid value: 0.64 mgKOH/g, hydroxyl value: 1.3 mgKOH/g, saponification value: 719.5 mgKOH/g, number-average molecular weight: 850; terminal alkyl esterification percentage: 98.5%; ether group value: 0 mmol/g).

Production Example 3 of Plasticizer - Diester Obtained from Terephthalic Acid and Triethylene Glycol Monomethyl Ether

A four-necked flask equipped with a stirrer, a thermometer, a distillation tube, and a nitrogen blowing tube was charged with 400 g of dimethyl terephthalate, 1,015 g of triethylene glycol monomethyl ether and 0.86 g of tin(II) octylate, and the mixture was stirred at 200°C and an ambient pressure for 14 hours to distill off methanol generated by the reaction, while blowing nitrogen at 200 mL/min in a space portion. Next, the temperature was cooled to an ambient temperature, 30 g of a 85% by mass phosphoric acid-containing triethylene glycol monomethyl ether solution was added thereto, and the mixture was stirred at 60°C and an ambient pressure for 1.5 hours to deactivate the catalyst tin(II) octylate, while blowing nitrogen at 500 mL/min in a space portion. Thereafter, 45 g of an adsorbent KYOWAAD 500SH manufactured by Kyowa Chemical Industry Co., Ltd. was added to the liquid reaction mixture, the mixture was stirred at 60°C and a pressure of 6.7 kPa for 1 hour and filtered, and triethylene glycol monomethyl ether was then distilled off at a liquid temperature of 120° to 150°C and a pressure of 0.02 kPa. After the temperature was cooled to 60°C, the residue liquid was filtered under a reduced pressure, to provide a diester obtained from terephthalic acid and triethylene glycol monomethyl ether in the form of yellow, slightly viscous liquid as a filtrate.

Examples 1 to 29, and 33 and Comparative Examples 1 to 9

Raw materials for polyester resin compositions constituting a fan as listed in Tables 1 to 9 were melt-kneaded at 240°C with an intermeshing co-rotating twin-screw extruder manufactured by The Japan Steel Works, Ltd., TEX-28V, and strand-cut, to provide pellets of the resin compositions. Here, the pellets obtained were subjected to dehumidification drying at 110°C for 3 hours, to adjust its water content to 500 ppm or less.

The pellets obtained were injection-molded with an injection-molding machine manufactured by The Japan Steel Works, Ltd., J110AD-180H, cylinder temperatures set at 6 locations, of which cylinder temperature was set at

240°C for the sections up to fifth units from the nozzle end side, at 170°C for the remaining one unit, and at 45°C for the section below the hopper, to mold into rectangular test pieces (125 mm × 12 mm × 6 mm, 63 mm × 13 mm × 6.4 mm), and flat plate test pieces (127 mm × 12.7 mm × 1.2 mm, 127 mm × 12.7 mm × 1.6 mm) at a mold temperature set to 80°C, to provide a molded article of the resin composition. In addition, with respect to Examples 3, 13, and 14, injection molding was carried out in the same manner with an injection-molding machine SE180D, manufactured by Sumitomo Heavy Industries Limited using a propeller shaped mold, to provide a propeller fan.

Examples 30 to 32 and Comparative Example 10

Raw materials for polyester resin compositions constituting a fan as listed in Table 4 or 6 were melt-kneaded at 280°C with an intermeshing co-rotating twin-screw extruder manufactured by The Japan Steel Works, Ltd., TEX-28V, and strand-cut, to provide pellets of the polyester resin compositions. Here, the pellets obtained were subjected to dehumidification drying at 110°C for 3 hours, to adjust its water content to 500 ppm or less.

The pellets obtained were injection-molded with an injection-molding machine manufactured by The Japan Steel Works, Ltd., J110AD-180H, cylinder temperatures set at 6 locations, of which cylinder temperature was set at 270°C for the sections up to fifth units from the nozzle end side, at 230°C for the remaining one unit, and at 45°C for the section below the hopper, to mold into rectangular test pieces (125 mm × 12 mm × 6 mm), and flat plate test pieces (127 mm × 12.7 mm × 1.2 mm) at a mold temperature set to 130°C, to provide a molded article of the resin composition.

Comparative Example 11

Raw materials constituting a fan as listed in Table 7 were injection-molded with the injection-molding machine. The cylinder temperature was set at 220°C for the sections up to fifth units from the nozzle end side, at 170°C for the remaining one unit, and at 45°C for the section below the hopper. The injection molding was carried out with an injection-molding machine SE180D, manufactured by Sumitomo Heavy Industries Limited at a mold temperature set to 40°C using a propeller shaped mold, to provide a propeller fan.

Here, the raw materials in Tables 1 to 9 are as follows.

[Thermoplastic Polyester Resin]

PBT: A polybutylene terephthalate resin, NOVADURAN 5010R5 manufactured by Mitsubishi Engineering-Plastics Corporation, unreinforced, glass transition temperature: 50°C, crystallization enthalpy ΔHmc: 44 J/g

PTT: A polytrimethylene terephthalate resin, Sorona, a registered trademark, Brite manufactured by Du Pont, unreinforced, glass transition temperature: 50°C, crystallization enthalpy ΔHmc: 52 J/g

PET: A polyethylene terephthalate resin, RT-553C manufactured by Japan Unipet Co., Ltd., unreinforced, glass transition point: 70°C, crystallization enthalpy ΔHmc: 42 J/g

[Thermoplastic General-Purpose Resin]

ABS: An acrylonitrile-butadiene-styrene copolymer resin, TOYOLAC 700-314 manufactured by Toray Industries, Inc., unreinforced

[Plasticizer]

DAIFATTY-101: A mixed diester obtained from adipic acid and a 1/1 diethylene glycol monomethyl ether/benzyl alcohol manufactured by DAIHACHI CHEMICAL INDUSTRY CO., LTD.

$(MeEO_3)_2SA$: A diester obtained from succinic acid and triethylene glycol monomethyl ether, produced according to the above Production Example 1 of Plasticizer

MeSA-1,3PD: A diester obtained from succinic acid and 1,3-propanediol and methanol, produced according to the above Production Example 2 of Plasticizer

$(MeEO_3)_2TPA$: A diester obtained from terephthalic acid and triethylene glycol monomethyl ether, produced according to the above Production Example 3 of Plasticizer

DOP: Bis(2-ethylhexyl) phthalate, DOP manufactured by DAIHACHI CHEMICAL INDUSTRY CO., LTD.

DOA: Bis(2-ethylhexyl) adipate, DOA manufactured by DAIHACHI CHEMICAL INDUSTRY CO., LTD.

KP-L115: Bisphenol S dioctyl ether, manufactured by KAO Corporation

[Elastomer]

Styrene-isoprene block copolymer: HYBRAR 5127 manufactured by Kuraray Plastics Co., Ltd., glass transition temperature: 8°C, styrene content: 20% by mass
Polyester elastomer: PELPRENE P-150M manufactured by TOYOBO CO., LTD., glass transition temperature: -25°C
Styrene-butadiene block copolymer (hydrogenated): S.O.E.L609 manufactured by ASAHI KASEI CHEMICALS, glass transition temperature: 10°C, styrene content: 67% by mass

[Inorganic Filler]

Mica: A-21S manufactured by YAMAGUCHI MICA CO., LTD., length of the longest side of the largest side: 23 μm, thickness of the largest side: 0.33 μm, aspect ratio: 70
Mica (aminosilane-treated): MICAKET 21P5 manufactured by YAMAGUCHI MICA CO., LTD., length of the longest side of the largest side: 23 μm, thickness of the largest side: 0.33 μm, aspect ratio: 70
Talc: MICROACE P-6 manufactured by Nippon Talc Co., Ltd., length of the longest side of the largest side: 4 μm, thickness of the largest side: 0.13 μm, aspect ratio: 31
Talc (epoxy resin-treated): P-4 surface-treated product, manufactured by Nippon Talc Co., Ltd., length of the longest side of the largest side: 4.5 μm, thickness of the largest side: 0.13 μm, aspect ratio: 35
Glass Fibers: CSF 3PE-941 manufactured by Nittobo, average fiber length: 3 mm, average fiber diameter: 13 μm, aspect ratio: 231
Glass Fibers (flat cross section): 3PA-820 manufactured by Nittobo, average fiber length: 3 mm, average fiber diameter: 4 μm, aspect ratio: 750

[Crystal Nucleating Agent]

Benzoate Na: Sodium benzoate manufactured by Wako Pure Chemical Industries, Ltd.
NA-05: An organic nitrogen-containing compound manufactured by ADEKA
The properties of the molded articles obtained were evaluated in accordance with the methods of the following Test Examples 1 to 6. The results are shown in Tables 1 to 9.

Test Example 1 - Flexural Modulus

As to rectangular test pieces having dimensions of 125 mm × 12 mm × 6 mm, as prescribed in JIS K7203, a flexural test was carried out with TENSILON manufactured by Orientec Co., LTD., TENSILON Tensile Tester RTC-1210A, with setting a crosshead speed to 3 mm/min to obtain a flexural modulus. It can be judged that a flexural modulus is high, and an initial vibration is small when a flexural modulus is 1.6 GPa or more, and it can be judged that the higher the numerical value, the higher the effects.

Test Example 2 - Loss Factor

As to flat test pieces having dimensions of 127 mm × 12.7 mm × 1.2 mm, as prescribed in JIS G0602, a test piece was fixed to a jig as shown in FIG. 1, and loss factor was obtained from free damped vibration waveform of flexural vibration by free-fixed impact vibration testing. Maximum Xn of response displacement was detected with a CCD Laser Displacement Sensor, LK-GD5000 manufactured by KEYENCE, and analyzed over time with an FFT Analyzer, Photon II manufactured by ARBROWN CO., LTD. The calculated zone of the response displacement was set at from 3.0 mm to 0.5 mm with an exception for the response displacement at an initial impact. It can be judged that the loss factor is high and the attenuation of vibrations is fast when the loss factor is preferably 0.05 or more, and more preferably 0.06 or more, and it can be judged that the higher the numerical value, the higher the effects.

Test Example 3 - Fan Vibration Test

A propeller fan (PF150-5P-R, manufactured by Fantec, ϕ: 3.18) having a diameter of 150 mm, molded by injection molding was used. A system comprising Type 3160 as an oscillator, Type 2718 as an amplifier, Type 4810 as an excitation element, and Type 8001 as an accelerator sensor was used, all of the components being manufactured by B & K, and each of the instruments was controlled with a personal computer. A central portion of a molded article of the fan was attached to a contact chip, fixed to an accelerator sensor, random excitations were applied, and vibrations dB were calculated from a vibration speed detected at the accelerator sensor within a frequency range of from 20 Hz to 12,000 Hz. The measurement environment was temperature-controlled with a thermostat (PU-3J manufactured by

ESPEC Corporation) to 23°C, 0°C, or 40°C, and vibrations dB at a resonance frequency of from 300 Hz to 500 Hz were obtained. It can be judged that the lower the numerical value, the more reduced the vibrations.

Test Example 4 - Fan Noise Test

The same propeller fan molded article as above was used. The fan molded article was attached to a rotating shaft of a motor RS-540SH manufactured by Mabuchi Motor Co., Ltd., fixed as shown in FIG. 2, provided with a cover made of polyvinyl chloride attached with a felt as a sound absorbing material having a thickness of 7 mm in the surroundings, and rotated at each of the number of rotations. Noises generated when rotated at a number of rotations N (noise level: A dB) and the frequency corresponding to F = NZ/60 (Z=5) when rotated at the number of rotations N were plotted. The noise level was measured from a noise collecting instrument SL-1370 manufactured by CUSTOM Corporation, which was located 30 cm away from the fan. The noise level measurement was carried out in a quiet space at an environmental noise of 48 dB, and an average in 5 seconds was obtained. It can be judged that the lower the numerical value, the more reduced the noises.

Test Example 5 - Loss Factor Temperature Dependence Test

As to flat test pieces having dimensions of 127 mm × 12.7 mm × 1.6 mm, the loss factor was calculated in accordance with half band width method from peaks of secondary resonance frequency of the frequency response function measured according to a central excitation method as prescribed in JIS K7391. A system comprising Type 3160 as an oscillator, Type 2718 as an amplifier, Type 4810 as an exciter, and Type 8001 as an accelerator sensor, all of which are manufactured by B & K, and a loss factor measurement software MS 18143 was used. The measurement environment was controlled with a thermostat PU-3J manufactured by ESPEC Corporation, and measurements were taken within the temperature ranges of from 0°C to 80°C. It can be judged that if a loss factor at each temperature is preferably 0.05 or more, loss factor is high, so that the vibration-damping property is high.

Test Example 6 - Izod Impact Resistance

As to rectangular test pieces having dimensions of 63 mm × 13 mm × 6.4 mm, to which a 13 mm notch was provided, an impact test was carried out with an Izod impact tester manufactured by YASUDA SEIKI SEISAKUSHO LTD. as prescribed in JIS K7110. It can be judged that the higher the numerical value, the higher the impact resistance.

Test Example 7 - Fan Noise Test 2

The same propeller fan molded article as above was used. The fan molded article was attached to a rotating shaft of a motor, AC motor manufactured by KUSATSU ELECTRIC CO., LTD., fixed as shown in FIG. 5, and rotated at each of the number of rotations. Noises generated at this time were collected with a noise collecting instrument 4189-A-029 manufactured by B & K at a position of 100 mm away from the width and 200 mm away from the bottom of the fan, and subjected to FFT analysis. The measurement time was 60 seconds, the average number of runs at one frequency was 358 points, and the properties of frequency-weightings were analyzed with A-weighting. The noise level measurement was carried out in a quiet space at an environmental noise of 40 dB. Among the FFT analyses of fan noises at each number of rotations, the frequency of the rotation noise peaks corresponding to F = 2NZ/60 and the noise level were measured. Here, the materials for the propeller fan molded article were polyester resin compositions of Examples 13 and 14. The results are shown in Table 10 and FIG. 6.

Test Example 8 - Noise Test of Fan Structural Member

The same propeller fan as above was used, except that the material was ABS. The fan was attached to a rotating shaft of a motor, AC motor manufactured by KUSATSU ELECTRIC CO., LTD., and fixed as shown in FIG. 7. As a structural member, using each of the materials of Example 14, Example 33, and Comparative Example 11, a plate having a width of 180 mm, a length of 100 mm, a height of 80 mm, and a thickness of 20 mm was fixed thereto as a structural member of fan and used, respectively. Noises generated when rotated at each number of rotations (noise level: A dB) were measured from a noise collecting instrument SL-1370 manufactured by CUSTOM Corporation, which was located at a position 200 mm in a width direction and 200 mm below the fan. The noise level measurement was carried out in a quiet space at an environmental noise of 48 dB, and an average in 5 seconds was obtained. The fan noise levels at each number of rotations were measured. The results are shown in Table 11.

[Table 1]

Table 1

| | | Examples | | | | | | | | |
|---|---|---|---|---|---|---|---|---|---|---|
| | | 1 | 2 | 3 | 4 | 5 | 6 | 7 | 8 | 9 |
| Resin | PBT | 100 | 100 | 100 | 100 | 100 | 100 | 100 | 100 | 100 |
| Plasticizer | DAIFATTY-101 | 5 | 10 | 15 | 20 | - | - | - | - | - |
| | $(MeEO_3)_2$SA | - | - | - | - | 15 | - | - | - | - |
| | MeSA-1,3PD | - | - | - | - | - | 15 | - | - | - |
| | $(MeEO_3)_2$TPA | - | - | - | - | - | - | 15 | - | - |
| | DOP | - | - | - | - | - | - | - | 15 | |
| | DOA | - | - | - | - | - | - | - | - | 15 |
| Elastomer | Styrene-Isoprene Block Copolymer | - | - | - | - | - | - | - | - | - |
| | Polyester Elastomer | - | - | - | - | - | - | - | - | - |
| Inorganic Filler | Mica | 40 | 40 | 40 | 40 | 40 | 40 | 40 | 40 | 40 |
| | Mica (Aminosilane-Treated) | - | - | - | - | - | - | - | - | - |
| | Talc | - | - | - | - | - | - | - | - | - |
| | Glass Fibers | - | - | - | - | - | - | - | - | - |
| | Glass Fibers (Flat Cross Section) | - | - | - | - | - | - | - | - | - |
| Mass Ratio of (Plasticizer, Elastomer) to (Inorganic Filler) [(Plasticizer, Elastomer)/ Inorganic Filler] | | 11/89 | 20/80 | 27/73 | 33/67 | 27/73 | 27/73 | 27/73 | 27/73 | 27/73 |
| Rigidity | Flexural Modulus, GPa | 3.9 | 3.2 | 2.7 | 2.5 | 2.6 | 3.0 | 2.8 | 3.2 | 3.1 |
| Vibration-Damping Property | Loss Factor | 0.065 | 0.080 | 0.089 | 0.091 | 0.085 | 0.080 | 0.084 | 0.071 | 0.068 |
| *: The amounts of the raw materials used are expressed by parts by mass. | | | | | | | | | | |

[Table 2]

Table 2

| | | Examples | | | | | |
|---|---|---|---|---|---|---|---|
| | | 10 | 11 | 12 | 13 | 14 | 15 |
| Resin | PBT | 100 | 100 | 100 | 100 | 100 | 100 |
| Plasticizer | DAIFATTY-101 | - | - | - | - | 15 | 15 |
| | $(MeEO_3)_2SA$ | - | - | - | - | - | - |
| | MeSA-1,3PD | - | - | - | - | - | - |
| | $(MeEO_3)_2TPA$ | - | - | - | - | - | - |
| | DOP | - | - | - | - | - | - |
| | DOA | - | - | - | - | - | - |
| Elastomer | Styrene-Isoprene Block Copolymer | 10 | 18 | 18 | 30 | 15 | 30 |
| | Polyester Elastomer | - | - | - | - | - | - |
| Inorganic Filler | Mica | 40 | 47 | - | 40 | 40 | 40 |
| | Mica (Aminosilane-Treated) | - | - | - | - | - | - |
| | Talc | - | - | - | - | - | - |
| | Glass Fibers | - | - | - | - | - | - |
| | Glass Fibers (Flat Cross Section) | - | - | 47 | - | - | - |
| Mass Ratio of (Plasticizer, Elastomer) to (Inorganic Filler) [(Plasticizer, Elastomer)/Inorganic Filler] | | 20/80 | 28/82 | 28/82 | 43/57 | 43/57 | 53/47 |
| Rigidity | Flexural Modulus, GPa | 3.8 | 3.9 | 2.9 | 3.7 | 2.4 | 2.0 |
| Vibration-Damping Property | Loss Factor | 0.064 | 0.086 | 0.061 | 0.118 | 0.133 | 0.197 |
| *: The amounts of the raw materials used are expressed by parts by mass. | | | | | | | |

[Table 3]

Table 3

| | | Examples | | | | | | | | | |
|---|---|---|---|---|---|---|---|---|---|---|---|
| | | 3 | 16 | 17 | 18 | 19 | 20 | 21 | 22 | 23 | 24 |
| Resin | PBT | 100 | 100 | 100 | 100 | 100 | 100 | 100 | 100 | 100 | 100 |
| Plasticizer | DAIFATTY-101 | 15 | 15 | 15 | 15 | 15 | 15 | 15 | 15 | 15 | 15 |
| | $(MeEO_3)_2SA$ | - | - | - | - | - | - | - | - | - | - |
| | MeSA-1,3PD | - | - | - | - | - | - | - | - | - | - |
| | $(MeEO_3)_2TPA$ | - | - | - | - | - | - | - | - | - | - |
| | DOP | - | - | - | - | - | - | - | - | - | - |
| | DOA | - | - | - | - | - | - | - | - | - | - |
| Elastomer | Styrene-Isoprene Block Copolymer | - | - | - | - | - | - | - | - | - | - |
| | Polyester Elastomer | - | - | - | - | - | - | - | - | - | - |
| Inorganic Filler | Mica | 40 | 15 | 25 | 30 | 55 | 65 | - | - | - | - |
| | Mica (Aminosilane-Treated) | - | - | - | - | - | - | 40 | - | - | - |
| | Talc | - | - | - | - | - | - | - | 40 | - | - |
| | Glass Fibers | - | - | - | - | - | - | - | - | 40 | - |
| | Glass Fibers (Flat Cross Section) | - | - | - | - | - | - | - | - | - | 40 |
| Mass Ratio of (Plasticizer, Elastomer) to (Inorganic Filler) [(Plasticizer, Elastomer)/Inorganic Filler] | | 27/73 | 50/50 | 38/62 | 33/67 | 21/79 | 19/81 | 27/73 | 27/73 | 27/73 | 27/73 |
| Rigidity | Flexural Modulus, GPa | 2.7 | 1.6 | 2.0 | 2.3 | 3.2 | 4.0 | 2.8 | 2.3 | 2.0 | 2.1 |
| Vibration-Damping Property | Loss Factor | 0.089 | 0.093 | 0.091 | 0.090 | 0.080 | 0.060 | 0.089 | 0.080 | 0.070 | 0.075 |
| *: The amounts of the raw materials used are expressed by parts by mass. | | | | | | | | | | | |

[Table 4]

Table 4

| | | Examples | | | | | | | |
|---|---|---|---|---|---|---|---|---|---|
| | | 25 | 26 | 27 | 28 | 29 | 30 | 31 | 32 |
| Resin | PBT | 100 | - | - | - | - | - | - | - |
| | PTT | - | 100 | 100 | 100 | 100 | - | - | - |
| | PET | - | - | - | - | - | 100 | 100 | 100 |
| Plasticizer | DAIFATTY-101 | 15 | 15 | - | 15 | - | - | - | - |
| | KP-L115 | - | - | - | - | - | - | - | 15 |
| Elastomer | Styrene-Isoprene Block Copolymer | - | - | 30 | 15 | 30 | 30 | 30 | 15 |
| Inorganic Filler | Mica | 40 | 40 | 40 | 40 | 40 | - | - | - |
| | Talc (Epoxy Resin-Treated) | - | - | - | - | - | 40 | - | 40 |
| | Glass Fibers | - | - | - | - | - | - | 40 | - |
| Organic Crystal Nucleating Agent | Sodium Benzoate | 0.5 | - | - | - | 0.5 | - | - | - |
| | NA-05 | - | - | - | - | - | 0.3 | 0.3 | 0.3 |
| Mass Ratio of (Plasticizer, Elastomer) to (Inorganic Filler) [(Plasticizer, Elastomer)/Inorganic Filler] | | 27/73 | 27/73 | 43/57 | 43/57 | 43/57 | 43/57 | 43/57 | 43/57 |
| Rigidity | Flexural Modulus, GPa | 2.9 | 3.4 | 4.6 | 2.8 | 4.7 | 3.4 | 4.5 | 3.1 |
| Vibration-Damping Property | Loss Factor | 0.070 | 0.070 | 0.086 | 0.101 | 0.099 | 0.051 | 0.065 | 0.077 |
| *: The amounts of the raw materials used are expressed by parts by mass. | | | | | | | | | |

[Table 5]

Table 5

| | | Comparative Examples | | | | |
|---|---|---|---|---|---|---|
| | | 1 | 2 | 3 | 4 | 5 |
| Resin | PBT | 100 | 100 | 100 | 100 | 100 |
| Plasticizer | DAIFATTY-101 | - | - | 15 | - | - |
| | $(MeEO_3)_2SA$ | - | - | - | - | - |
| | MeSA-1,3PD | - | - | - | - | - |
| | $(MeEO_3)_2TPA$ | - | - | - | - | - |
| | DOP | - | - | - | - | - |
| | DOA | - | - | - | - | - |

(continued)

| | | Comparative Examples | | | | |
|---|---|---|---|---|---|---|
| | | 1 | 2 | 3 | 4 | 5 |
| Elastomer | Styrene-Isoprene Block Copolymer | - | - | - | 30 | - |
| | Polyester Elastomer | - | - | - | - | 18 |
| Inorganic Filler | Mica | - | 40 | - | - | - |
| | Mica (Aminosilane-Treated) | - | - | - | - | - |
| | Talc | - | - | - | - | - |
| | Glass Fibers | - | - | - | - | - |
| | Glass Fibers (Flat Cross Section) | - | - | - | - | 47 |
| Mass Ratio of (Plasticizer, Elastomer) to (Inorganic Filler) [(Plasticizer, Elastomer)/Inorganic Filler] | | - | - | 0 | 0 | 28/82 |
| Rigidity | Flexural Modulus, GPa | 2.2 | 4.0 | 0.6 | 1.4 | 2.7 |
| Vibration-Damping Property | Loss Factor | 0.012 | 0.009 | 0.102 | 0.067 | 0.022 |
| *: The amounts of the raw materials used are expressed by parts by mass. | | | | | | |

[Table 6]

Table 6

| | | Comparative Examples | | | | |
|---|---|---|---|---|---|---|
| | | 6 | 7 | 8 | 9 | 10 |
| Resin | PTT | 100 | 100 | 100 | 100 | - |
| | PET | - | - | - | - | 100 |
| Plasticizer | DAIFATTY-101 | - | - | 15 | - | - |
| Elastomer | Polyester Elastomer | - | - | - | 30 | - |
| Inorganic Filler | Mica | - | 40 | - | - | - |
| Organic Crystal Nucleating Agent | NA-05 | - | - | - | - | 0.3 |
| Mass Ratio of (Plasticizer, Elastomer) to (Inorganic Filler) [(Plasticizer, Elastomer)/Inorganic Filler] | | - | - | 0 | 0 | 0 |
| Rigidity | Flexural Modulus, GPa | 2.6 | 6.0 | 1.0 | 1.2 | 2.8 |
| Vibration-Damping Property | Loss Factor | 0.010 | 0.005 | 0.080 | 0.050 | 0.014 |
| *: The amounts of the raw materials used are expressed by parts by mass. | | | | | | |

[Table 7]

Table 7 - Vibrations and Vibration Noises of Fan at Room Temperature

| | | Examples | | Comparative Example |
|---|---|---|---|---|
| | | 13 | 14 | 11 |
| Resin | PBT | 100 | 100 | - |
| | ABS | - | - | 100 |
| Plasticizer | DAIFATTY-101 | - | 15 | - |
| Elastomer | Styrene-Isoprene Block Copolymer | 30 | 15 | - |
| Inorganic Filler | Mica | 40 | 40 | - |
| Mass Ratio of (Plasticizer, Elastomer) to (Inorganic Filler) [(Plasticizer, Elastomer)/Inorganic Filler] | | 43/57 | 43/57 | - |
| Vibration Test at 23°C | Resonance Frequency, Hz | 434 | 334 | 372 |
| | Vibrations dB | -30 | -30 | -10 |
| Noise Test at 23°C | Frequency, Hz | 334 | | |
| | Noise Level | 85 | 86 | 88 |
| Noise Test at 23°C | Frequency, Hz | 372 | | |
| | Noise Level | 87 | 87 | 91 |
| Noise Test at 23°C | Frequency, Hz | 434 | | |
| | Noise Level | 93 | 91 | 95 |

[Table 8]

Table 8 - Vibrations of Fan at Low Temperatures and High Temperatures

| | | Examples | | Comparative Example |
|---|---|---|---|---|
| | | 13 | 14 | 11 |
| Resin | PBT | 100 | 100 | - |
| | ABS | - | - | 100 |
| Plasticizer | DAIFATTY-101 | - | 15 | - |
| Elastomer | Styrene-Isoprene Block Copolymer | 30 | 15 | - |
| Inorganic Filler | Mica | 40 | 40 | - |
| Mass Ratio of (Plasticizer, Elastomer) to (Inorganic Filler) [(Plasticizer, Elastomer)/Inorganic Filler] | | 43/57 | 43/57 | - |
| Vibration Test at 23°C | Resonance Frequency, Hz | 434 | 334 | 372 |
| | Vibrations dB | -30 | -30 | -10 |
| Vibration Test at 0°C | Resonance Frequency, Hz | 498 | 436 | 384 |
| | Vibrations dB | -16 | -26 | -8 |
| Vibration Test at 23°C | Resonance Frequency, Hz | 360 | 288 | 370 |
| | Vibrations dB | -28 | -28 | -9 |

[Table 9]

Table 9 - Loss Factor at a Low Temperature and a High Temperature

| | | Examples | | | |
|---|---|---|---|---|---|
| | | 3 | 13 | 14 | 33 |
| Resin | PBT | 100 | 100 | 100 | 100 |
| Plasticizer | DAIFATTY-101 | 15 | - | 15 | 15 |
| Elastomer | Styrene-Isoprene Block Copolymer | - | 30 | 15 | - |
| | Styrene-Butadiene Block Copolymer, Hydrogenated | - | - | - | 15 |
| Inorganic Filler | Mica | 40 | 40 | 40 | 40 |
| Mass Ratio of (Plasticizer, Elastomer) to (Inorganic Filler) [(Plasticizer, Elastomer)/Inorganic Filler] | | 27/73 | 43/57 | 43/57 | 43/57 |
| Rigidity | Flexural Modulus, GPa | 2.7 | 3.7 | 2.4 | 2.4 |
| Toughness | Izod Impact Property, J/m | 40 | 30 | 40 | 57 |
| Vibration-Damping Property | Loss Factor at 23°C *1 | 0.089 | 0.118 | 0.133 | 0.900 |
| Vibration- Damping Property | Loss Factor at 0°C *2 | 0.055 | 0.019 | 0.064 | 0.091 |
| Vibration-Damping Property | Loss Factor at 40°C *2 | 0.095 | 0.081 | 0.120 | 0.123 |
| *1: Measured according to the method of Test Example 2.<br>*2: Measured according to the method of Test Example 5. | | | | | |

[Table 10]

Table 10

| Example 14 | | | Example 13 | | | Comparative Example 11 | | |
|---|---|---|---|---|---|---|---|---|
| No. of Rotations of Setting, rpm | Frequency, Hz, of Rotation Noise Peaks of F = 2NZ/60 | Noise Level, dB, of Rotation Noise Peaks of F = 2NZ/60 | No. of Rotations of Setting, rpm | Frequency, Hz, of Rotation Noise Peaks of F = 2NZ/60 | Noise Level, dB, of Rotation Noise Peaks of F = 2NZ/60 | No. of Rotations of Setting, rpm | Frequency, Hz, of Rotation Noise Peaks of F = 2NZ/60 | Noise Level, dB, of Rotation Noise Peaks of F = 2NZ/60 |
| 1,900 | 308 | 34 | 1,900 | 312 | 32 | 1,900 | 316 | 33 |
| 1,950 | 324 | 34 | 1,950 | 328 | 35 | 1,950 | 328 | 36 |
| 2,000 | 336 | 40 | 2,000 | 336 | 41 | 2,000 | 336 | 42 |
| 2,030 | 336 | 40 | 2,030 | 340 | 40 | 2,030 | 332 | 43 |
| 2,050 | 340 | 39 | 2,050 | 344 | 41 | 2,050 | 340 | 41 |
| 2,100 | 352 | 38 | 2,100 | 348 | 40 | 2,100 | 348 | 38 |
| 2,200 | 368 | 39 | 2,200 | 364 | 39 | 2,200 | 372 | 39 |
| 2,250 | 376 | 40 | 2,250 | 372 | 40 | 2,250 | 372 | 40 |
| 2,300 | 384 | 42 | 2,300 | 380 | 43 | 2,300 | 384 | 43 |

[Table 11]

Table 11

| Example 14 | | Example 33 | | Comparative Example 11 | |
|---|---|---|---|---|---|
| No. of Rotations of Setting, rpm | Noise Level, dB | No. of Rotations of Setting, rpm | Noise Level, dB | No. of Rotations of Setting, rpm | Noise Level, dB |
| 300 | 50 | 300 | 50 | 300 | 50 |
| 350 | 52 | 350 | 52 | 350 | 52 |
| 400 | 55 | 400 | 56 | 400 | 60 |
| 450 | 59 | 450 | 60 | 450 | 64 |
| 500 | 61 | 500 | 62 | 500 | 64 |
| 550 | 63 | 550 | 63 | 550 | 64 |
| 600 | 65 | 600 | 65 | 600 | 66 |
| 650 | 67 | 650 | 68 | 650 | 68 |
| 700 | 70 | 700 | 70 | 700 | 70 |

As a result, as shown in Tables 1 to 6, Examples 1 to 32 had high effects in both the flexural modulus and loss factor, as compared to those of Comparative Examples 1 to 10. From these results, it can be seen that rigidity and vibration-damping properties are improved by blending a plasticizer and/or an elastomer and an inorganic filler in various thermoplastic polyester resins, thereby making it possible to make fan having vibration-soundproof effects, suggesting applications to diversified uses. In addition, it can be seen that it is made possible to even more increase loss factor while maintaining high flexural modulus by a combined use of a plasticizer and an elastomer (Examples 14 and 15). It can be seen from the comparisons of Examples 3 and 21 to 14 that both flexural modulus and loss factor become high by using a plate-like filler among the inorganic fillers, among which mica is preferred.

In addition, as shown in Tables 7 and 8 and FIG. 3, it can be seen that Examples 13 and 14 have smaller vibrations or noise even at the same frequency as compared to Comparative Example 11, and exhibit sufficient vibration-damping functions not only in a room-temperature region but also in a low-temperature region and a high-temperature region. In addition, as shown in Table 9 and FIG. 4, the fan of the present invention has a high loss factor not only in a room-temperature region but also in a low-temperature region and a high-temperature region. Further, as shown in Table 9, loss factor at a low temperature was increased by using a styrene-butadiene block copolymer, hydrogenated (Example 33). From this result, high vibration-damping effects can be expected at low-temperatures by using the fan produced using the composition.

It can be seen from Table 10 and FIG. 6 (the graph summarizing the relationship of frequency and noise based on Table 10) that the noises are reduced by the fan of the present invention under the conditions at which the resonance frequency obtained according to a vibration test in Table 7 and the frequency of the rotation noise peaks corresponding to F = 2NZ/60 overlap, specifically, at a resonance frequency of 334 Hz in Example 14.

It can be seen from Table 11 that the noise levels measured under the conditions of the number of rotations of from 400 to 550 are reduced by using a polyester resin composition in the present invention as a material of a structural member of the fan, not the blades of the fan.

## INDUSTRIAL APPLICABILITY

The fan of the present invention can be suitably used in, for example, manufactured articles, such as audio equipment such as speakers, television, radio cassette recorders, headphones, audio components, or microphones, electric appliances, transportation vehicles, construction buildings, and industrial equipment, or parts thereof.

## Claims

1. A fan comprising a polyester resin composition comprising:

   a thermoplastic polyester resin (A) constituted of a dicarboxylic acid component and a diol component,
   a plasticizer and/or an elastomer (B), and
   an inorganic filler (C).

2. The fan according to claim 1, wherein the dicarboxylic acid component in the thermoplastic polyester resin (A) comprises one or more members selected from the group consisting of aliphatic dicarboxylic acids, alicyclic dicarboxylic acids, aromatic dicarboxylic acids, and dicarboxylic acids having a furan structure.

3. The fan according to claim 1 or 2, wherein the diol component in the thermoplastic polyester resin (A) comprises one or more members selected from the group consisting of aliphatic diols, alicyclic diols, aromatic diols, and diols having a furan structure.

4. The fan according to any one of claims 1 to 3, wherein the inorganic filler (C) is a plate-like filler.

5. The fan according to any one of claims 1 to 4, wherein the inorganic filler (C) is mica.

6. The fan according to any one of claims 1 to 5, wherein the component (B) comprises one or more members of plasticizers and one or more members of elastomers.

7. A method for reducing vibration noise **characterized by** the use of a fan as defined in any one of claims 1 to 6.

[FIG. 1]

FIG. 1

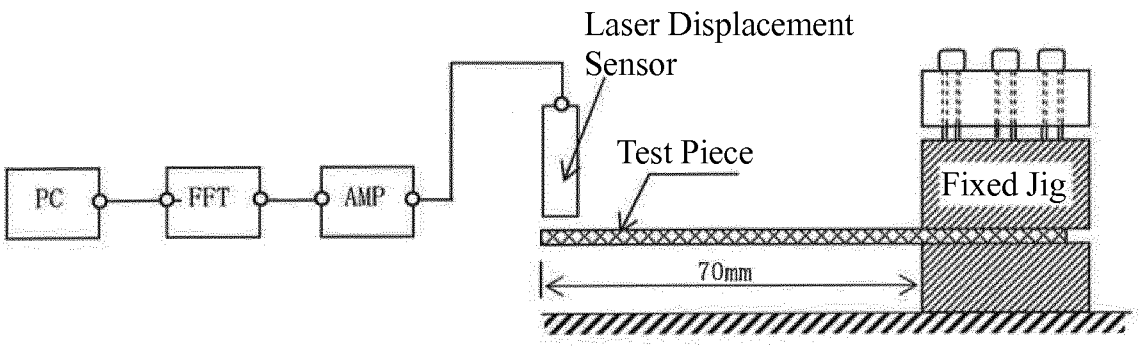


[FIG. 2]

FIG. 2

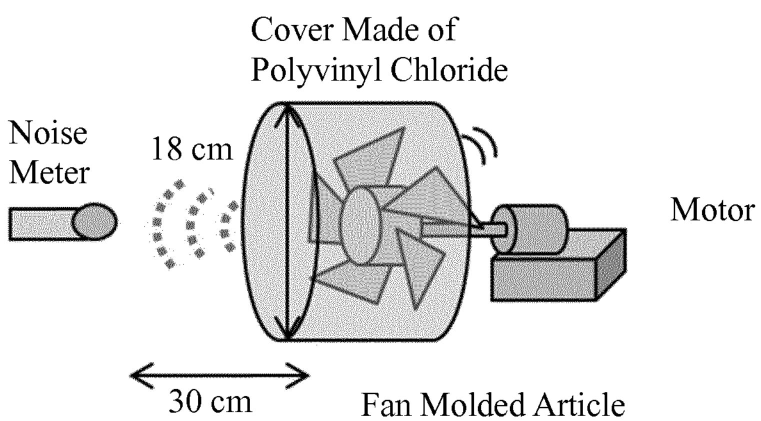

[FIG. 3]

FIG. 3

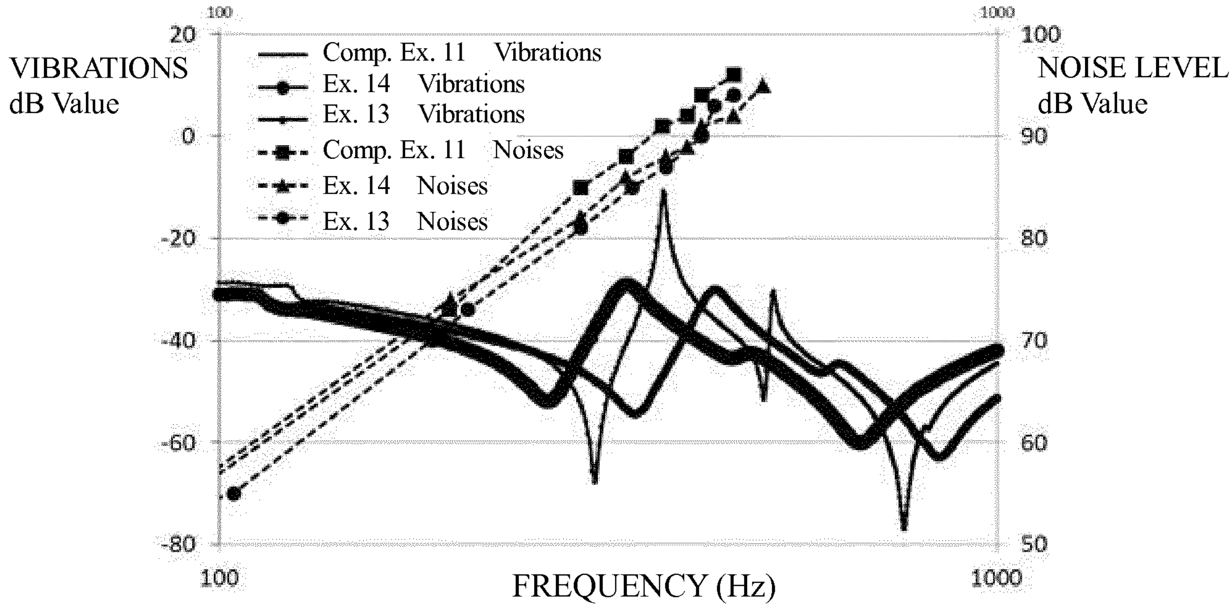


[FIG. 4]

FIG. 4

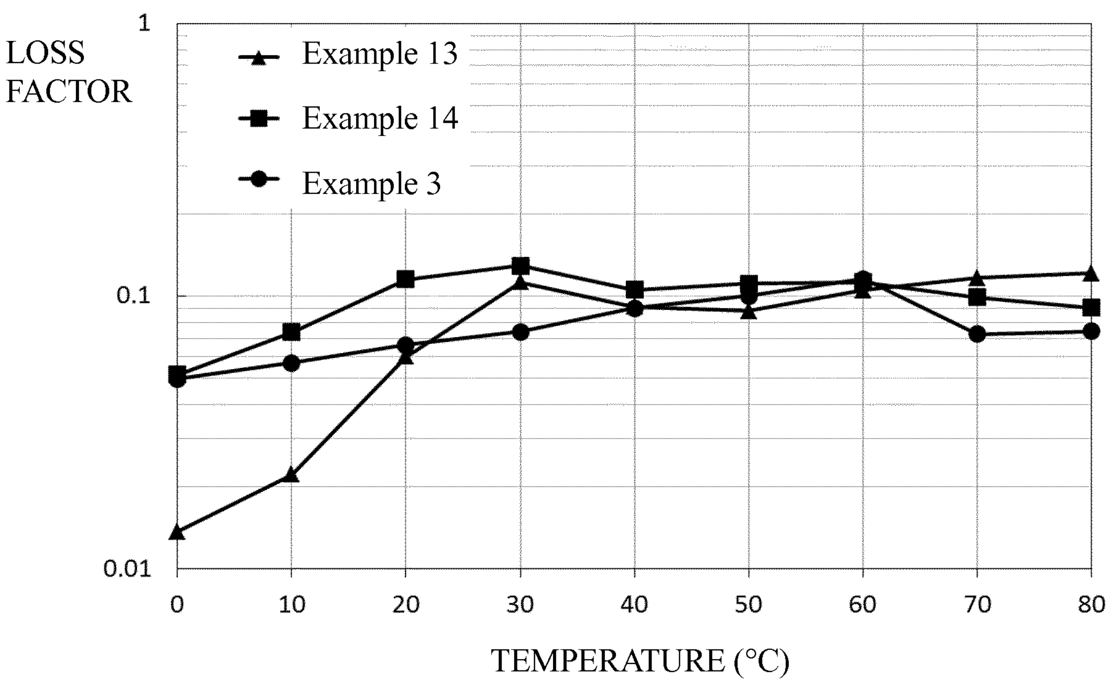

[FIG. 5]

FIG. 5

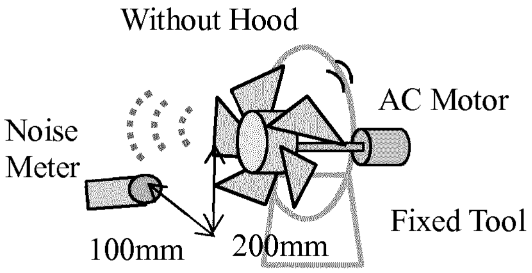


[FIG. 6]

FIG. 6

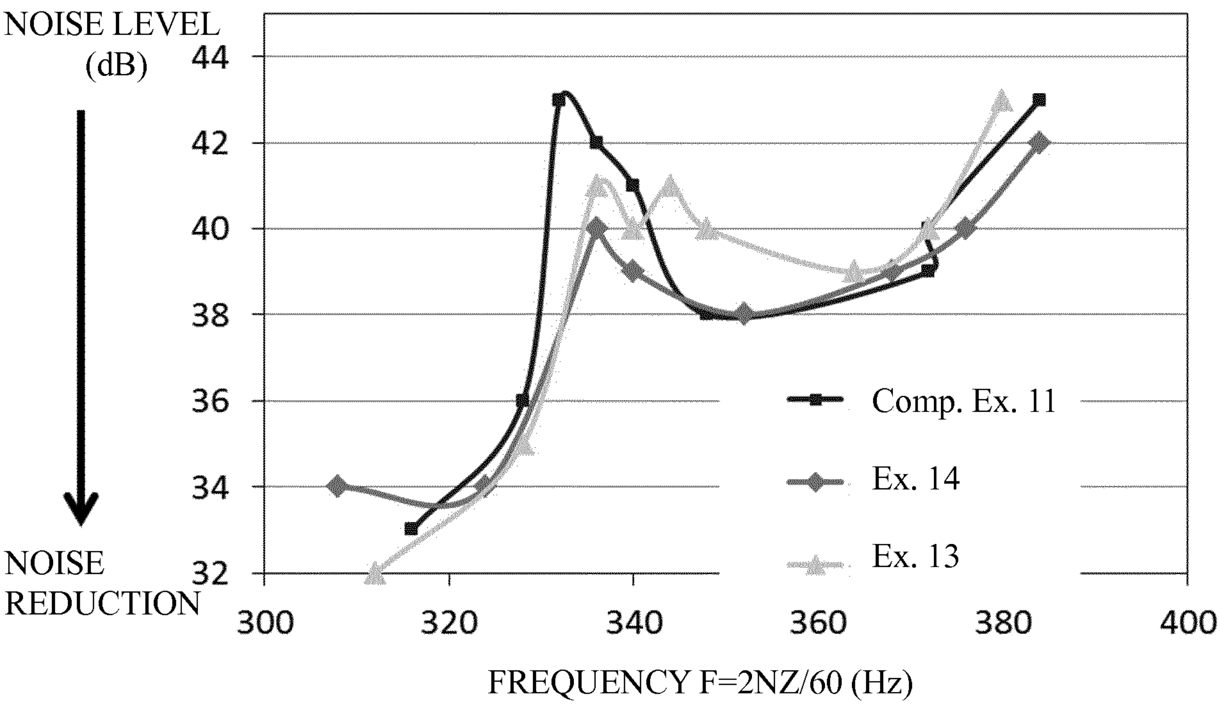

[FIG. 7]

FIG. 7

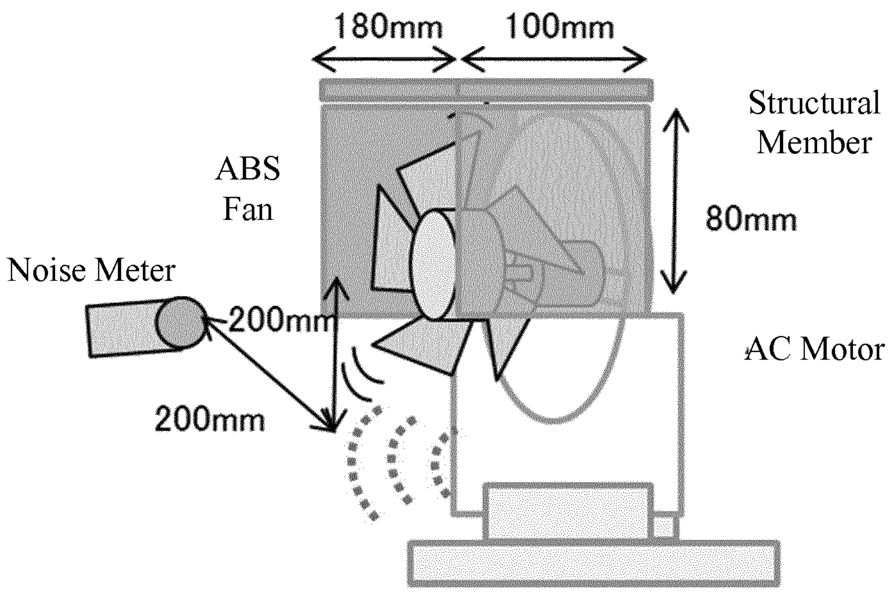
180mm
100mm
Structural
Member
ABS
Fan
80mm
Noise Meter
200mm
200mm
AC Motor

**INTERNATIONAL SEARCH REPORT**

International application No.
PCT/JP2017/010773

A. CLASSIFICATION OF SUBJECT MATTER

*C08L67/02*(2006.01)i, *C08K3/34*(2006.01)i, *C08K7/00*(2006.01)i, *C08L53/02*(2006.01)i, *F04D29/02*(2006.01)i, *F04D29/66*(2006.01)i

According to International Patent Classification (IPC) or to both national classification and IPC

B. FIELDS SEARCHED

Minimum documentation searched (classification system followed by classification symbols)
C08L67/02, C08K3/34, C08K7/00, C08L53/02, F04D29/02, F04D29/66

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 10-245449 A (Chisso Corp.), 14 September 1998 (14.09.1998), claims; paragraphs [0001] to [0029]; fig. 1 to 2 (Family: none) | 1-6 |
| X | JP 2007-9143 A (Wintech Polymer Ltd.), 18 January 2007 (18.01.2007), paragraphs [0009] to [0031] (Family: none) | 1-6 |
| X | JP 3-263457 A (Polyplastics Co., Ltd.), 22 November 1991 (22.11.1991), page 2, upper left column, line 1 to page 7, upper right column, line 2 (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 May 2017 (22.05.17) | 30 May 2017 (30.05.17) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

INTERNATIONAL SEARCH REPORT

International application No.
PCT/JP2017/010773

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-204665 A (Boron Japan Co., Ltd.), 16 August 2007 (16.08.2007), paragraphs [0001] to [0158] (Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI9184497 B
- JP HEI11119781 B
- JP SHO63236633 B
- JP SHO59124843 B
- JP SHO56159158 B
- JP 2002212417 A